(19) Europäisches Patentamt
European Patent Office
Office européen des brevets

(11) EP 4 221 503 B1

(12) **EUROPEAN PATENT SPECIFICATION**

(45) Date of publication and mention of the grant of the patent:
**20.08.2025 Bulletin 2025/34**

(21) Application number: **21786865.2**

(22) Date of filing: **01.10.2021**

(51) International Patent Classification (IPC):
***A01N 31/02*** *(2006.01)* ***A01P 3/00*** *(2006.01)*

(52) Cooperative Patent Classification (CPC):
**A01N 31/02**

(86) International application number:
**PCT/EP2021/077114**

(87) International publication number:
**WO 2022/069714 (07.04.2022 Gazette 2022/14)**

(54) **FUNGICIDAL COMPOSITIONS COMPRISING TRIALKYL SULFONIUM SALTS**

FUNGIZIDE ZUSAMMENSETZUNGEN ENTHALTEND TRIALKYLSULFONIUMSALZE

COMPOSITIONS FONGICIDES COMPRENANT DES SELS DE SULFONIUM TRIALKYLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.10.2020 EP 20199747**
**02.10.2020 EP 20199746**

(43) Date of publication of application:
**09.08.2023 Bulletin 2023/32**

(73) Proprietors:
- **Helm AG**
**20097 Hamburg (DE)**
- **University of Exeter**
**Exeter, Devon EX4 4QJ (GB)**

(72) Inventors:
- **NESS, Winfried**
**20097 Hamburg (DE)**
- **RAMINHOS, Henrique**
**20097 Hamburg (DE)**
- **STROOT, Jörg**
**20097 Hamburg (DE)**
- **STEINBERG, Gero**
**Exeter Devon EX4 4QJ (GB)**
- **GURR, Sarah**
**Exeter Devon EX4 4QJ (GB)**
- **NIENDORF, Johann-Christian**
**20097 Hamburg (DE)**

(74) Representative: **Kutzenberger Wolff & Partner**
**Waidmarkt 11**
**50676 Köln (DE)**

(56) References cited:
**WO-A1-2020/201698**
**WO-A1-93/17723**
**FR-A- 810 437**
**US-A- 4 464 194**
**US-A- 4 475 941**
**US-A- 4 542 023**

- **PAUL R YOUNG ET AL: "Inhibition of the phospholipase C hydrolysis of a thiophosphate analog of lysophosphatidylcholine by micelle-bound ammonium and sulfonium cations", LIPIDS, SPRINGER-VERLAG, BERLIN/ HEIDELBERG, vol. 26, no. 11, 1 November 1991 (1991-11-01), pages 957 - 959, XP035174040, ISSN: 1558-9307, DOI: 10.1007/BF02535984**
- **"Synthesis of new cationic surfactant containing sulfur and study on their physico-chemical properties", 16 April 1994, CHEMICAL ABSTRACTS SERVICE, U.S.A., article JIANG FEIHUA ET AL: "Synthesis of new cationic surfactant containing sulfur and study on their physico-chemical properties", pages: 1 - 2, XP055781961**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **KENJI NEGORO ET AL: "Preparation of Alkylethylmethylsulfonium Iodide and Their Physico-chemical, Antimicrobial Properties", YUKAGAKU.- JOURNAL OF THE JAPAN OIL CHEMISTS' SOCIETY., vol. 27, no. 1, 20 January 1978 (1978-01-20), JP, pages 47 - 51, XP055696558, ISSN: 0513-398X, DOI: 10.5650/ jos1956.27.47**
- **KIYOSHI YAMAUCHI ET AL: "Three-Phase Model of Micellar Reactions. Methylation of Thymidine by (Long-chain-alkyl)dimethylsulfonium Iodides", J. AM. CHEM. SOC, vol. 105, 1 February 1983 (1983-02-01), pages 538 - 545, XP055690018, DOI: 10.1021/ja00341a039**
- **STEINBERG GERO ET AL: "A lipophilic cation protects crops against fungal pathogens by multiple modes of action", NATURE COMMUNICATIONS, vol. 11, no. 1, 30 March 2020 (2020-03-30), pages 1 - 19, XP055877624, Retrieved from the Internet <URL:https://www. nature.com/articles/s41467-020-14949-y.pdf> DOI: 10.1038/s41467-020-14949-y**

## Description

Priority is claimed of European patent application no. 20 199 747.5 that was filed on October 2, 2020 and European patent application no. 20 199 746.7 that was filed on October 2, 2020.

The invention relates to compositions compnsing trialkyl sulfonium salts, to the non-therapeutic use of the trialkyl sulfonium salts and of the compositions as pesticide, preferably as fungicide, and to non-therapeutic methods for controlling or combating pests and/or improving plant health by means of the trialkyl sulfonium salts and the compositions.

Fungi are distributed worldwide. Approximately 100 000 different fungal species are known to date. Fungi pose one of the greatest biotic challenges to crop plant health and thus to food security. During the infection of plants by pathogenic fungi, different phases are usually observed. The first phases of the interaction between phytopathogenic fungi and their potential host plants are decisive for the colonization of the plant by the fungus. During the first stage of the infection, the spores become attached to the surface of the plants, germinate, and the fungus penetrates the plant. This may occur at existing ports such as stomata or wounds, but could also involve the formation of specialized penetration structures or the secretion of cell-wall-digesting enzymes. Our most effective strategies to control fungal pathogens on crops are based on the use of fungitoxic chemistries (fungicides). Over the last decades, numerous fungicides have been developed and are commercially available.

Intensive farming practices, such as monoculture cropping - where vast fields of genetically - uniform cultivars, and the rapid generation time foster the development of fungicide resistance in fungal pathogens. This resistance can occur within a few years of fungicide use in the field. Indeed, the rate of emergence of fungicide resistance outpaces the rate of fungicide discovery.

There are currently only a few new fungicides under development and regulatory approval but these are derivatives of commonly-used chemistries, such as those which target ergosterol biosynthesis, cell wall biosynthesis or particular complexes of the mitochondrial respiration chain. However, the fungicides of the prior art are not satisfactory in every respect and there is a demand for improved fungicides.

There is a continuing need for more effective treatments against crop pathogens to secure our future food production. The rapid development of fungicide resistance in market-leader chemistries makes identification of new fungicides a priority. These fungicides should (i) be active against crop-destroying pathogens, (ii) target a fundamental process at multiple sites to reduce resistance development (iii) be of low toxicity to humans and the environment.

One potential target of new fungicides are fungal mitochondria. Fungal mitochondria differ from their mammalian counterpart in the composition and function of respiratory enzymes, which makes them attractive targets for new fungicides. In a canonical respiratory chain in the mitochondria of eukaryotes, there are four basic protein complexes enabling electron transport and proton pumping that result in electrochemical gradient generation and ATP synthesis. In contrast to animals, fungi contain specific types of complexes including the rotenone-insensitive type II NAD(P)H dehydrogenase or alternative NAD(P)H dehydrogenase (NDH-2) and a cyanide-insensitive alternative oxidase (AOX), which all belong to mitochondrial energy-dissipating systems (see e.g. Nina Antos-Krzeminska et al., Protist, Vol. 170, 21-37, February 2019).

Mitochondria are involved in a broad range of cellular processes, but most importantly host the enzymes for oxidative phosphorylation. Oxidative phosphorylation depends on a proton gradient over the inner mitochondrial membrane, which is maintained by electron transfer through the membrane-bound mitochondrial respiration chain complexes. During this process, mitochondria produce reactive oxygen species (mROS), which in fungi was shown to occur at complex I and complex III (Murphy, M.P. How mitochondria produce reactive oxygen species. Biochem. J. 417,1-13 (2009). These mROS seem to serve intracellular signaling roles and, if deregulated, damage proteins and lipids in the inner mitochondrial membrane and trigger apoptotic cell death. Increasing evidence suggests that such a programmed cell death pathway exists in fungi and targeting this pathway is a promising strategy to develop novel antifungals. (Li, D. et al. Enzymatic dysfunction of mitochondrial complex I of the Candida albicans goal mutant is associated with increased reactive oxidants and cell death. Eukaryot. Cell 10, 672-682 (2011)

Electron-transfer through the respiration chain triggers proton transport across the inner mitochondrial membrane. This leaves the matrix negatively charged and, as such, it becomes a target for lipophilic cations. These molecules, which combine a cationic head group with a lipophilic moiety pass through cellular membranes and accumulate in the inner membrane of the mitochondrion and expose their cationic moiety towards the matrix. This behavior allows delivery of therapeutics into mitochondria, but can also inhibit the respiratory enzymes. Whilst such effect on mitochondria function challenges use of lipophilic cations in medicine, it could be key for the use of lipophilic cations as plant fungicides / antifungals (G. Steinberg et al. A lipohilic cation protects crops against fungal pathogens by multiple modes of action. Nature Communications 11: 1608 (2020). However, the amphiphilic structure of these molecules also suggests that they are inserted into the plasma membrane. Indeed, until recently, antifungal lipophilic n-alkyl chain cations (=cationic surfactants) were thought to kill fungal cells by altering permeability or function of the plasma membrane. However, a recent publication convincingly demonstrated that lipophilic n-alkyl chain cations, namely the fungicide dodine, a C18-sulfonium, and a C18-ammonium salt inhibit fungal oxidative phosphorylation (G. Steinberg et al. A lipohilic cation protects

crops against fungal pathogens by multiple modes of action. Nature Communications 11:1608 (2020).

The best-studied lipophilic n-alkyl chain cations is dodecyl guanidinium, which carries a positively charged guanidinium group and is currently used as the fungicide Syllit (dodine).

FR 1 182 709 A relates to salts of dodecyl-guanidine as fungicides. US 2,867,562 A relates to monocarboxylic acid salts of dodecylguanidine which are highly effective in controlling fungus organisms injurious to the fruit and foliage of fruit trees, and with fungicidal compositions containing these compounds. US 3,143,459 A relates to nonfoaming wettable powder compositions containing active fungicides such as dodecylguanidine acetate and to methods of preparing such compositions. US 3,157,695 A relates to cyclododecylguanidine and its organic and inorganic salts which are said to have parasiticidal, in particular fungicidal properties.

Dodine is a protectant fungicide that is widely used to control fruit scab and foliar diseases in orchards. Dodine's mode of action is controversial, with results supporting a permeabilizing effect in fungal cells, while others reported the inhibition of vital metabolic enzymes. A recent study has demonstrated that the primary mode of action of dodine is the inhibition of mitochondrial respiration (G. Steinberg et al.). While dodine is useful as a fungicide, it has some issues with toxicity in aquatic organisms. Thus, it may cause environmental problems if it is used as a fungicide on crops or soil as this may result in water run-off to bodies of water such as lakes and rivers, for example.

A trialkyl sulfonium iodide salt (n-octadecyl dimethyl sulfonium iodide) was shown to provide increased protection against fungal diseases (namely Septoria tritici blotch in wheat and rice blast disease; G. Steinberg et al.). This trialkyl sulfonium iodide salt blocked oxidative phosphorylation, but also induced mROS development at respiratory complex I, which in turn induces fungal cell death (apoptosis; G. Steinberg et al.). Moreover, this compound also induces the innate plant defense system (G. Steinberg et al.). In almost all aspects tested, n-octadeyl dimethyl sulfonium iodide is superior in performance and shows less toxicity than dodecyl guanidinium. Salts of n-octadecyl dimethyl sulfonium other than the iodide salt are not disclosed.

Trialkyl sulfonium salts are also known from the prior art for various purposes.

Certain trialkyl sulfonium salts have been used in textile industry. FR 2 256 278 A1 relates to trialkylsulphonium salts as fabric softeners. US 3,666,403 and US 3,826,609 relate to methods of dyeing a textile fiber in the presence of sulfonium salts such as dimethylstearylsulfonium salts.

A number of sulfonium salts have been found to inhibit specific cellular enzymes and prevent them from carrying out their normal physiological functions. Triphenylsulfonium chloride has been found to inhibit oxidative phosphorylation and adenosine triphosphate activity in addition to the electron-transfer system in the NAD-cytochrome b region of the respiratory chain. Several alkylsulfonium and alkyl disulfonium salts, such as decamethylene bis(dimethylsulfonium) and n-octadecyl dimethyl sulfonium bromides are potent inhibitors of phospholipase. Sulfonium compounds of similar structure can also inhibit cholinesterase (S. Mitchell, Biological Interactions of Sulfur Compounds, Taylor & Francis, 1996, pp. 208-210; P.R. Young et al., Lipids, 26(11), 1991, 957-959).

US 3,235,356 discloses a method of controlling the growth and propagation of plants by applying thereto alkyl dimethyl sulfonium salts such as octadecyl dimethyl sulfonium methosulfate. US 4,475,941 A relates to a process for the destruction or/and inhibition of the growth of microorganisms by means of organic derivatives of tin to which is added a sulfonium function bearing compound such as tetradecyl dimethyl sulfonium methosulfate. US 4,753,961 A discloses bactericidal compositions comprising a trialkyl sulfonium salt, such as tetradecyl dimethyl sulfonium methosulfate (TDSM).

Certain trialkyl sulfonium salts have been reported to exhibit fungicidal activity. FR 2 467 547 A1 relates to sulfonium compounds such as tetradecyl dimethyl sulfonium halides or methosulfates that are said to be useful as bactericides, fungicides, algicides and corrosion inhibitors. US 4,088,781 A relates to sulphonium compounds having a sulfur atom bearing a 2-hydroxy-ethyl group which in addition to their advantageous surface-active properties have a fungicidal activity which can be utilized without harm to plants.

US 4,542,023 A relates to fungicidal salts of organophosphorous derivatives. The cations of these salts can be trialkyl sulfonium cations.

US 4,464,194 A relates to mixed alkylsulfonium salts of N-phosphonomethylglycine such as dimethyl octadecyl sulfonium salt of N-phosphonomethylglycine.

P.R. Young et al., Lipids, Springer, vol. 26(11), 1991, 957-959 discloses that cetyl trimethyl ammonium and n-octadecyl dimethyl sulfonium bromides inhibit the *Clostridium perfrigens* phospholipase C-catalyzed hydrolysis of 1-S-phosphocholine-2-O-hexadecanoyl-1-mercapto-2-ethanol at pH 7.5, 37°C, $\mu$ = 0.15 with KCl.

JP S45 36830 B relates to cellulose acetate fibers that may contain 1-30% diethylstearyl-sulfonium chloride.

J. Feihua et al., synthesis of new cationic surfactant containing sulfur and study on their physico-chemical properties, chemical abstracts service, 1994;194520, 1-2 discloses that sulfine cation surfactants were prepared from high fatty alcohols. e.g. octadecanol, with high yield. The products had good antibacterial effect for staphylococcus and colon bacillus.

FR 810 437 relates to antimicrobial sulfonium salts such as octadecyl dimethyl sulfonium methosulfate.

WO 93/17723 relates to biodegradable surface disinfectants including methyl sulfate of dimethyl octadecyl

sulfonium cations.

K. Negoro et al., journal of the Japan oil chemists' society, 27(1), 1978, 47-51 relates to the preparation of alkyl ethyl methyl sulfonium iodide and their physico-chemical, antimicrobial properties. One synthesized species is alkyl: $C_{18}H_{37}$, i.e. ethyl methyl octadecyl sulfonium iodide.

K. Yamanauchi et al., J. Am. Chem. Soc. 1983, 105, 538-545 relates to a three-phase model of micellar reactions and methylation of thymidine by (long-vhain-alkyl)dimethylsulfonium iodide.

However, the fungicides of the prior art are not satisfactory in every respect and there is a demand for improved fungicides having improved properties, especially with regard to any one of the following properties or combinations thereof: (a) pesticidal, preferably fungicidal activity; (b) biological activity; (c) compatibility with the environment and toxicity; (d) weathering properties such as resistance against UV radiation and solubility in runoff water; (e) compatibility with agricultural additives; (f) solubility in water and in aqueous media under various pH values; (g) dissolution rate in water and in aqueous media; (h) behavior in the solid state such as crystallinity and polymorphism; (i) physical properties such as density; (j) chemical properties such as degradation; (k) spectral and optical properties; (l) thermal properties such as melting point and boiling point; (m) olfactory properties; (n) electrical properties and ionic strength; (o) mechanical properties such as hardness; (p) surface tension; (q) hygroscopicity; (r) pH value; (s) salt character, cation anion interaction, covalent character; (t) ageing; (u) traceability; (v) processability; (w) storage stability and shelf-life; (x) synthetic obtainability; and/or (y) economic aspects.

It would be advantageous to provide cationic surfactant-based antifungal compounds, which improve upon the efficacy of known cationic surfactant-based antifungal compounds against specific fungi or against a wide range of fungi. It would furthermore be advantageous to provide more effective cationic surfactant-based antifungal compounds, compositions and treatments which target the metabolism of fungi at multiple sites in one or more metabolic pathways. Such fungicides would ideally employ a novel multi-site mode of action, which targets fundamental processes in the pathogenic cell.

Further, it would be advantageous to provide cationic surfactant-based antifungal compounds which are easy to prepare at limited costs, have a good compatibility with additives that are typically contained in compositions, and that contribute to the overall fungicidal performance not only with regard to biological activity, efficacy and potency, but also with regard to applicability, release kinetics, weatherability, and the like.

Furthermore, it would be advantageous to provide cationic surfactant-based antifungal compounds in form of highly concentrated formulations that can be diluted to agricultural formulations by adding suitable diluting agents such as water shortly before use. The highly concentrated formulations may then be shipped at reduced costs. However, the highly concentrated formulations should exhibit sufficient stability of the ingredients contained therein at high concentrations.

It is an object of the invention to provide pesticides, particularly fungicides that have advantages compared to the prior art. They should be benign to the environment, specific for pests to be treated or prevented, suitable for treating a large variety of different plants and combating a large variety of different harmful pests, particularly fungi. Further, they should have a prolonged eradicating persistent effect such that a certain while after treatment the pests, particularly fungi do not retain their original harmful effect.

This object has been achieved by the subject-matter of the patent claims.

It has been surprisingly found that electrolytes enhance the pesticidal activity, particularly the fungicidal activity, of trialkyl sulfonium salts, in particular of n-octadecyl dimethyl sulfonium salts. It has been found that electrolytes improve the efficacy of trialkyl sulfonium salts irrespective of the nature of the counterion of the trialkyl sulfonium salts, particularly of chlorides and hydroxides.

Further, it has been surprisingly found that a variety of electrolytes comprising different cations and anions are suitable to improve the pesticidal activity of trialkyl sulfonium salts.

Still further, it has been surprisingly found that electrolytes enhance the pesticidal activity, particularly the fungicidal activity, of trialkyl sulfonium salts against different types of pests, in particular fungi.

There is experimental indication that certain salts of trialkyl sulfonium, particularly the trialkyl sulfonium chlorides, are more stable than others, especially under UV-light.

A first aspect of the invention relates to a trialkyl sulfonium salt of formula (A)

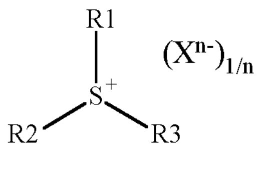

(A)

wherein

R1 represents $-CH_3$, $-CH_2CH_3$, $-CH_2CH_2CH_3$, or $-CH(CH_3)_2$; preferably $-CH_3$;
R2 represents $-CH_3$, $-CH_2CH_3$, $-CH_2CH_2CH_3$, or $-CH(CH_3)_2$; preferably $-CH_3$;
R3 represents $-C_{17-32}$-alkyl, straight or branched, saturated or unsaturated; preferably $-(CH_2)_{17}-CH_3$, $-(CH_2)_{19}-CH_3$, or $-(CH_2)_{21}-CH_3$,
$X^{n-}$ is a monovalent or multivalent anion; and
n is an integer 1, 2 or 3;

or a solvate thereof.

When the trialkyl sulfonium salt is present in form of a solvate, the type and stoichiometry of the solvate is not particularly limited. In preferred embodiments, the trialkyl sulfonium salt is a hydrate, preferably selected from hemihydrate, monohydrate and dihydrate. In other preferred embodiments, the trialkyl sulfonium salt is an anhydrate, preferably an ansolvate.

Preferably, the trialkyl sulfonium salt is selected from n-octadecyl dimethyl sulfonium salts, n-octadecyl methyl ethyl sulfonium salts, n-octadecyl diethyl sulfonium salts, n-octadecyl methyl propyl sulfonium salts, n-octadecyl ethyl propyl sulfonium salts, n-octadecyl dipropyl sulfonium salts; n-eicosyl dimethyl sulfonium salts, n-eicosyl methyl ethyl sulfonium salts, n-eicosyl diethyl sulfonium salts, n-eicosyl methyl propyl sulfonium salts, n-eicosyl ethyl propyl sulfonium salts, n-eicosyl dipropyl sulfonium salts; n-docosyl dimethyl sulfonium salts, n-docosyl methyl ethyl sulfonium salts, n-docosyl diethyl sulfonium salts, n-docosyl methyl propyl sulfonium salts, n-docosyl ethyl propyl sulfonium salts, and n-docosyl dipropyl sulfonium salts.

Preferably, the trialkyl sulfonium salt is a n-octadecyl dimethyl sulfonium salt

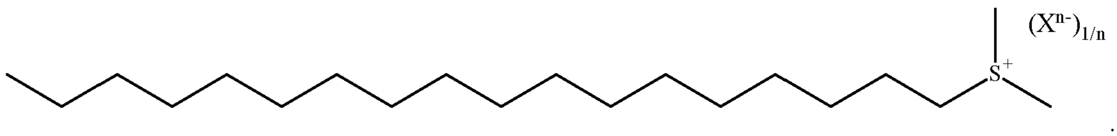

In a preferred embodiment, the trialkyl sulfonium salt, preferably the n-octadecyl dimethyl sulfonium salt, is a solid, preferably amorphous, crystalline or semi-crystalline.

In another preferred embodiment, the trialkyl sulfonium salt, preferably the n-octadecyl dimethyl sulfonium salt, is a liquid or a semi-solid.

It is contemplated that the trialkyl sulfonium salt according to general formula (A) may be present in admixture with one or more other trialkyl sulfonium salts according to general formula (A).

In preferred embodiments of the trialkyl sulfonium salt according to the invention, $X^{n-}$ is a monovalent anion (n = 1).

In other preferred embodiments of the trialkyl sulfonium salt according to the invention, $X^{n-}$ is a divalent anion (n = 2).

In further preferred embodiments of the trialkyl sulfonium salt according to the invention, $X^{n-}$ is a trivalent anion (n = 3).

Preferably, $X^{n-}$ does not represent chloride. Preferably, $X^{n-}$ does not represent bromide. Preferably, $X^{n-}$ does not represent iodide. Preferably, $X^{n-}$ does not represent hydroxide. Preferably, $X^{n-}$ does not represent sulfate. Preferably, $X^{n-}$ does not represent hydrogen sulfate. Preferably, $X^{n-}$ does not represent phosphate.

Preferably, $X^{n-}$ neither represents chloride, bromide, iodide, hydroxide, sulfate, hydrogen sulfate, nor phosphate.

In preferred embodiments of the trialkyl sulfonium salt according to the invention, $X^{n-}$ is the conjugate base of an inorganic acid.

In other preferred embodiments of the trialkyl sulfonium salt according to the invention, $X^{n-}$ is the conjugate base of an organic acid. In preferred embodiments, the organic acid is aliphatic. In other preferred embodiments, the organic acid is aromatic.

In preferred embodiments of the trialkyl sulfonium salt according to the invention, $X^{n-}$ is the conjugate base of an acid carrying at least one acidic functional group selected from $-CO_2H$, $-SO_3H$, and $-OSO_3H$.

In preferred embodiments of the trialkyl sulfonium salt according to the invention, $X^{n-}$ is the conjugate base of water (i.e. hydroxide, $HO^-$).

In preferred embodiments of the trialkyl sulfonium salt according to the invention, $X^{n-}$ is the conjugate base of a mineral acid; preferably selected from the group consisting of $HBF_4$, $HBO_2$, $HBO_3$, $H_3BO_3$, $H_2CO_3$, $H_4SiO_4$, $HNO_3$, $H_3PO_3$, $H_3PO_4$, $H_2S$, $H_2SO_3$, $HSO_3F$, $H_2SO_4$, HF, HCl, HBr, HI, $HClO_3$, and $HClO_4$. Thus, $X^{n-}$ is preferably selected from tetrafluoroborate, metaborate, perborate, borate, hydrogen carbonate, carbonate, silicate, nitrate, hydrogen phosphite, phosphite, dihydrogen phosphate, hydrogen phosphate, phosphate (orthophosphate), hydrogen sulfide, sulfide, hydrogen sulfite, sulfite, fluorosulfonate, hydrogen sulfate, sulfate, fluoride, chloride, bromide, iodide, chlorate and perchlorate.

In preferred embodiments of the trialkyl sulfonium salt according to the invention, $X^{n-}$ is $Cl^-$.

In preferred embodiments of the trialkyl sulfonium salt according to the invention, $X^{n-}$ is $I^-$.

In preferred embodiments of the trialkyl sulfonium salt according to the invention, $X^{n-}$ is $OH^-$.

In preferred embodiments of the trialkyl sulfonium salt according to the invention, $X^{n-}$ is the conjugate base of a monocarboxylic acid.

In preferred embodiments of the trialkyl sulfonium salt according to the invention, $X^{n-}$ is the conjugate base of a saturated aliphatic monocarboxylic acid; preferably selected from the group consisting of formic acid, acetic acid, propionic acid, butyric acid, valeric acid, caproic acid, enanthic acid, pelargonic acid, capric acid, undecylic acid, lauric acid, tridecylic acid, myristic acid, pentadecylic acid, palmitic acid, margaric acid, stearic acid, nonadecylic acid, and arachidic acid. Thus, $X^{n-}$ is preferably selected from formate, acetate, propionate, butyrate, valerate, caprylate, enanthate, pelargonate, caprate, undecylate, laurate, tridecylate, myristate, pentadecylate, palmitate, margarate, stearate, nonadecylate, arachidate.

In preferred embodiments of the trialkyl sulfonium salt according to the invention, $X^{n-}$ is the conjugate base of an unsaturated aliphatic monocarboxylic acid; preferably selected from the group consisting of acrylic acid, methacrylic acid, crotonic acid, and oleic acid. Thus, $X^{n-}$ is preferably selected from acrylate, methacrylate, crotonate and oleate.

In preferred embodiments of the trialkyl sulfonium salt according to the invention, $X^{n-}$ is the conjugate base of an aromatic monocarboxylic acid; preferably benzoic acid. Thus, $(X^{n-})_{1/n}$ is preferably benzoate. The aromatic monocarboxylic acid, preferably benzoic acid, may optionally be substituted with 1, 2 or 3 substituents independently of one another selected from -F, -Cl, -OH, $-OCH_3$, $-CH_3$, -CN, and $-NO_2$.

In other preferred embodiments of the trialkyl sulfonium salt according to the invention, $X^{n-}$ is the conjugate base of a dicarboxylic acid.

In preferred embodiments of the trialkyl sulfonium salt according to the invention, $X^{n-}$ is the conjugate base of a saturated aliphatic dicarboxylic acid; preferably selected from the group consisting of oxalic acid, malonic acid, succinic acid, glutaric acid, adipic acid, pimelic acid, suberic acid, azelaic acid, and sebacic acid. Thus, $X^{n-}$ is preferably selected from hydrogen oxalate, oxalate, hydrogen malonate, malonate, hydrogen succinate, succinate, hydrogen glutarate, glutarate, hydrogen adipate, adipate, hydrogen pimelate, pimelate, hydrogen suberate, suberate, hydrogen azelate, azelate, hydrogen sebacate and sebacate.

In preferred embodiments of the trialkyl sulfonium salt according to the invention, $X^{n-}$ is the conjugate base of an unsaturated aliphatic dicarboxylic acid; preferably selected from the group consisting of maleic acid, fumaric acid, glutaconic acid, muconic acid, citraconic acid, mesaconic acid, and itaconic acid. Thus, $X^{n-}$ is preferably selected from hydrogen maleate, maleate, hydrogen fumarate, fumarate, hydrogen glutaconate, glutaconate, hydrogen muconate, muconate, hydrogen citraconate, citraconate, hydrogen mesaconate, mesaconate, hydrogen itaconate and itaconate.

In preferred embodiments of the trialkyl sulfonium salt according to the invention, $X^{n-}$ is the conjugate base of an aromatic dicarboxylic acid; preferably selected from the group consisting of phthalic acid, isophthalic acid, and terephthalic acid. Thus, $X^{n-}$ is preferably selected from hydrogen phthalate, phthalate, hydrogen isophthalate, isophthalate, hydrogen terephthalate and terephthalate.

In preferred embodiments of the trialkyl sulfonium salt according to the invention, $X^{n-}$ is the conjugate base of a hydroxycarboxylic acid; preferably selected from the group consisting of glycolic acid, lactic acid, malic acid, tartaric acid, citric acid, and mandelic acid. Thus, $X^{n-}$ is preferably selected from glycolate, lactate, malate, hydrogen tartrate, tartrate, dihydrogen citrate, hydrogen citrate, citrate and mandelate.

In preferred embodiments of the trialkyl sulfonium salt according to the invention, $X^{n-}$ is the conjugate base of a keto carboxylic acid; preferably selected from the group consisting of pyruvic acid, acetoacetic acid, and levulinic acid. Thus, $X^{n-}$ is preferably selected from pyruvate, acetoacetate and levulate.

In preferred embodiments of the trialkyl sulfonium salt according to the invention, $X^{n-}$ is the conjugate base of a halogenated carboxylic acid; preferably selected from the group consisting of fluoroacetic acid, difluoroacetic acid, trifluoroacetic acid, chloroacetic acid, dichloroacetic acid, trichloroacetic acid. Thus, $X^{n-}$ is preferably selected from fluoroacetate, difluoroacetate, trifluoroacetate, chloroacetate, dichloroacetate and trichloroacetate.

In preferred embodiments of the trialkyl sulfonium salt according to the invention, $X^{n-}$ is the conjugate base of an amino acid; preferably selected from the group consisting of alanine, arginine, asparagine, aspartic acid, cysteine, glutamine, glutamic acid, glycine, histidine, isoleucine, leucine, lysine, methionine, phenylalanine, proline, serine, threonine, tryptophan, tyrosine, and valine. Thus, $X^{n-}$is preferably selected from alaninate, argininate, asparaginate, aspartate, cysteinate, glutaminate, glutamate, glycinate, histidinate, isoleucinate, leucinate, lysinate, methioninate, phenylalaninate, prolinate, serinate, threoninate, tryptophanate, tyrosinate, and valinate.

In preferred embodiments of the trialkyl sulfonium salt according to the invention, $X^{n-}$ is the conjugate base of an alkyl hydrogen sulfate; preferably methyl hydrogen sulfate. Thus, $X^{n-}$ is preferably methyl sulfate.

In preferred embodiments of the trialkyl sulfonium salt according to the invention, $X^{n-}$ is the conjugate base of an alkyl sulfonic acid; preferably selected from methyl sulfonic acid, trifluoromethyl sulfonic acid, and ethyl sulfonic acid. Thus, $X^{n-}$ is preferably selected from methyl sulfonate, trifluoromethyl sulfonate and ethyl sulfonate.

In preferred embodiments of the trialkyl sulfonium salt according to the invention, $X^{n-}$ is the conjugate base of an

aryl sulfonic acid; preferably selected from benzene sulfonic acid, and p-toluene sulfonic acid. Thus, $X^{n-}$ is preferably selected from benzene sulfonate and p-toluene sulfonate.

A particularly preferred trialkyl sulfonium salt according to the invention is n-octadecyl dimethyl sulfonium

a. hydroxide;

b. tetrafluoroborate, metaborate, perborate, borate, hydrogen carbonate, carbonate, silicate, nitrate, hydrogen phosphite, phosphite, dihydrogen phosphate, hydrogen phosphate, phosphate (orthophosphate), hydrogen sulfide, sulfide, hydrogen sulfite, sulfite, fluorosulfonate, hydrogen sulfate, sulfate, fluoride, chloride, bromide, iodide, chlorate, perchlorate;

c. formate, acetate, propionate, butyrate, valerate, caprylate, enanthate, pelargonate, caprate, undecylate, laurate, tridecylate, myristate, pentadecylate, palmitate, margarate, stearate, nonadecylate, arachidate;

d. acrylate, methacrylate, crotonate, oleate;

e. benzoate;

f. hydrogen oxalate, oxalate, hydrogen malonate, malonate, hydrogen succinate, succinate, hydrogen glutarate, glutarate, hydrogen adipate, adipate, hydrogen pimelate, pimelate, hydrogen suberate, suberate, hydrogen azelate, azelate, hydrogen sebacate, sebacate;

g. hydrogen maleate, maleate, hydrogen fumarate, fumarate, hydrogen glutaconate, glutaconate, hydrogen muconate, muconate, hydrogen citraconate, citraconate, hydrogen mesaconate, mesaconate, hydrogen itaconate, itaconate;

h. hydrogen phthalate, phthalate, hydrogen isophthalate, isophthalate, hydrogen terephthalate, terephthalate;

i. glycolate, lactate, malate, hydrogen tartrate, tartrate, dihydrogen citrate, hydrogen citrate, citrate, mandelate;

j. pyruvate, acetoacetate, levulate;

k. fluoroacetate, difluoroacetate, trifluoroacetate, chloroacetate, dichloroacetate, trichloroacetate;

l. alaninate, argininate, asparaginate, aspartate, cysteinate, glutaminate, glutamate, glycinate, histidinate, isoleucinate, leucinate, lysinate, methioninate, phenylalaninate, prolinate, serinate, threoninate, tryptophanate, tyrosinate, valinate;

m. methyl sulfate;

n. methyl sulfonate, trifluoromethyl sulfonate, ethyl sulfonate;

o. benzene sulfonate or p-toluene sulfonate.

Particularly preferred are n-octadecyl dimethyl sulfonium bromide, n-octadecyl dimethyl sulfonium chloride, n-octadecyl dimethyl sulfonium acetate, n-octadecyl dimethyl sulfonium trifluoroacetate, n-octadecyl dimethyl sulfonium hydrogen oxalate, and n-octadecyl dimethyl sulfonium oxalate.

A particularly preferred trialkyl sulfonium salt according to the invention is n-octadecyl dimethyl sulfonium chloride.

A preferred trialkyl sulfonium salt according to the invention is n-octadecyl dimethyl sulfonium iodide.

A particularly preferred trialkyl sulfonium salt according to the invention is n-octadecyl dimethyl sulfonium hydroxide.

Another aspect of the invention, as set out in the appended claims, relates to a composition comprising a trialkyl sulfonium salt or a solvate thereof according to the invention as described above.

It is contemplated that the composition according to the invention may contain two or more trialkyl sulfonium salts according to general formula (A).

In preferred embodiments, the composition according to the invention comprises an agriculturally acceptable carrier, wherein the content of the carrier is at least 1.0 wt.-%, relative to the total weight of the composition.

In preferred embodiments of the composition according to the invention, the content of the carrier is at least 2.5 wt.-%; preferably at least 5.0 wt.-%, preferably at least 7.5 wt.-%, preferably at least 10 wt.-%, preferably at least 15 wt.-%, preferably at least 20 wt.-%, preferably at least 25 wt.-%, preferably at least 30 wt.-%, preferably at least 40 wt.-%, preferably at least 50 wt.-%, preferably at least 60 wt.-%, preferably at least 70 wt.-%, preferably at least 80 wt.-%, preferably at least 90 wt.-%; in each case relative to the total weight of the composition.

In preferred embodiments, the content of the carrier is at most 97.5 wt.-%, preferably at most 95 wt.-%, preferably at most 92.5 wt.-%, preferably at most 90 wt.-%, preferably at most 87.5 wt.-%, preferably at most 85 wt.-%, preferably at most 82.5 wt.-%, preferably at most 80 wt.-%, in each case relative to the total weight of the composition.

In preferred embodiments, the content of the carrier is within the range of 10±5.0 wt.-%, preferably 20±15 wt.-%, preferably 20±10 wt.-%, preferably 20±5.0 wt.-%, preferably 30±25 wt.-%, preferably 30±20 wt.-%, preferably 30±15 wt.-%, preferably 30±10 wt.-%, preferably 30±5.0 wt.-%, preferably 40±35 wt.-%, preferably 40±30 wt.-%, preferably 40 ±25 wt.-%, preferably 40±20 wt.-%, preferably 40±15 wt.-%, preferably 40±10 wt.-%, preferably 40±5.0 wt.-%, preferably 50±45 wt.-%, preferably 50±40 wt.-%, preferably 50±35 wt.-%, preferably 50±30 wt.-%, preferably 50 ±25 wt.-%, preferably 50±20 wt.-%, preferably 50±15 wt.-%, preferably 50±10 wt.-%, preferably 50±5.0 wt.-%, preferably 60±35 wt.-%, preferably 60±30 wt.-%, preferably 60±25 wt.-%, preferably 60±20 wt.-%, preferably 60 ±15 wt.-%, preferably 60±10 wt.-%, preferably 60±5.0 wt.-%, preferably 70±25 wt.-%, preferably 70±20 wt.-%, preferably 70±15 wt.-%, preferably 70±10 wt.-%, preferably 70±5.0 wt.-%, preferably 80±15 wt.-%, preferably 80 ±10 wt.-%, preferably 80±5.0 wt.-%, preferably 90±5.0 wt.-%, in each case relative to the total weight of the composition.

**In** preferred embodiments of the composition according to the invention, the carrier is selected from the group consisting of

(a) water;

(b) monoalcohols such as methanol, ethanol, propanol, isopropanol, cyclohexanol, or benzyl alcohol;

(c) glycols such as ethylene glycol, propylene glycol, diethylene glycol, or dipropylene glycol;

(d) monoalkyl glycol ethers such as triethylene glycol monobutyl ether;

(e) dialkyl glycol ethers such as ethylene glycol dimethylether;

(f) glycol esters;

(g) glycerol and glycerol ethers such as isopropylidine glycerol;

(h) cyclic ethers such as tetrahydrofuran or dioxolane;

(i) ketones such as acetone, butanone, or cyclohexanone;

(j) monobasic esters such as ethyl lactate, ethyl acetate, or gamma-butyrolactone;

(k) dibasic esters such as glutaric acid dimethylester or succinic acid dimethylester;

(l) alkylene carbonates such as ethylene carbonate or propylene carbonate;

(m) dialkyl sulfoxides such as dimethyl sulfoxide;

(n) alkylsulfones such as sulfolanes;

(o) alkyl amides such as N-methylpyrrolidone, N-ethylpyrrolidone, or dimethylformamide

(p) alkanolamines such as monoethanolamine, diethanolamine, triethanolamine, alkyldiethanolamines, or dialkylmonoethanolamines;

(q) fatty acids, fatty acid esters, fatty acid amides;

(r) oils such as oils of vegetable or animal origin, phytobland oils, crop oils, crop oil concentrates, vegetable oils, methylated seed oils, petroleum oils, and silicone oils;

and combinations thereof.

In preferred embodiments of the composition according to the invention, the carrier is or comprises water.

In preferred embodiments of the composition according to the invention, the carrier is a solvent. Preferably, the trialkyl sulfonium salt is completely dissolved in the carrier.

In preferred embodiments of the composition according to the invention, the carrier is selected from the group consisting of

(a) natural soil minerals and mineral earth, such as silicates, calcites, marble, pumice, sepiolite, talc, kaolins, clays, talc, limestone, lime, calcium carbonate, chalk, bole, loess, quartz, perlite, attapulgite, montmorillonite, vermiculite, bentonite, dolomite, or diatomaceous earths;

(b) synthetic minerals, such as silica, silica gels, alumina or silicates, such as aluminum silicates or magnesium silicates;

(c) inorganic salts, such as aluminum sulfate, calcium sulfate, copper sulfate, iron sulfate, magnesium sulfate, silicon sulfate, magnesium oxide;

(d) synthetic granules of inorganic or organic flours;

(e) granules of organic material such as sawdust, coconut shell, corn ear or envelope, or tobacco stem;

(f) kieselguhr;

(g) tricalcium phosphate;

(h) polysaccharides, such as cellulose, cellulose ethers, starch, xanthan, pullulan, guar;

(i) products of vegetable origin, e.g. cereal meal, tree bark meal, wood meal, nutshell meal;

(j) grain flours such as flours from corn, rice, wheat, barley, sorghum, millet, oat, triticale, rye, buckwheat, fonio or quinoa;

(k) other organic matter such as powdered cork, adsorbent carbon black, charcoal, peat, soil mixture, compost, agro-industrial residues; water-soluble polymers, resins or waxes;

(l) solid fertilizers such as urea or ammonium salts such as ammonium sulfate, ammonium phosphate, ammonium nitrate;

and combinations thereof.

The constitution of the composition according to the invention is not particularly limited. Preferably, the composition is selected from solutions, suspensions, emulsions, gels, mousses, pastes, powders and granules. Aqueous suspensions are preferred.

In preferred embodiments, the composition according to the invention is a liquid or a paste.

In preferred embodiments, the composition according to the invention has a dynamic viscosity at 23°C of at least 0.5 mPa·s; preferably at least 0.6 mPa·s, preferably at least 0.7 mPa·s, preferably at least 0.8 mPa·s, preferably at least 0.9 mPa·s, preferably at least 1.0 mPa·s.

In preferred embodiments, the composition according to the invention has a dynamic viscosity at 23°C of at most 10,000 mPa·s; preferably at most 9,000 mPa·s, preferably at most 8,000 mPa·s, preferably at most 7,000 mPa·s, preferably at most 6,000 mPa·s, preferably at most 5,000 mPa·s, preferably at most 4,000 mPa·s, preferably at most 3,000 mPa·s, preferably at most 2,000 mPa·s, preferably at most 1,000 mPa·s, preferably at most 900 mPa·s, preferably at most 800 mPa·s, preferably at most 700 mPa·s, preferably at most 600 mPa·s, preferably at most 500 mPa·s, preferably at most 400 mPa·s, preferably at most 300 mPa·s, preferably at most 200 mPa·s, preferably at most 100 mPa·s, preferably at most 90 mPa·s, preferably at most 80 mPa·s, preferably at most 70 mPa·s, preferably at most 60 mPa·s, preferably at most 50 mPa·s, preferably at most 40 mPa·s, preferably at most 30 mPa·s, preferably at most 20 mPa·s, preferably at most 10 mPa·s.

The dynamic viscosity is preferably determined in accordance with EN ISO 3104 or ASTM D7042.

Preferably, the composition according to the invention is aqueous and has a pH value that provides a satisfactory balance of solubility of trialkyl sulfonium salt, stability of trialkyl sulfonium salt, and compatibility with the environment,

typically after dilution of a composition having a comparatively high concentration of trialkyl sulfonium salt to an agricultural composition having the desired lower concentration of trialkyl sulfonium salt to be used for agricultural purposes, i.e. to be contacted with crops. The pH dependency of the solubility of the trialkyl sulfonium salt may play an important role. It is principally desirable that the solubility of the trialkyl sulfonium salt on the one hand is comparatively high when it is provided in a form suitable to be deployed in the fields, and on the other hand is comparatively low when it is subsequently subjected to weathering in the fields thereby preventing that it is quickly taken away and rinsed off by rain and other runoff waters.

It has been surprisingly found that the water solubility of certain trialkyl sulfonium salts, especially of octadecyl dimethyl sulfonium chloride, has a minimum around pH 7.0, i.e. its water solubility increases at pH values below 7.0 and likewise at pH values above 7.0. This solubility behavior is particularly advantageous because highly concentrated compositions to be deployed in the fields can be prepared at pH values below 7.0 or above 7.0. Once such compositions have been deployed in the fields, the trialkyl sulfonium chloride, preferably octadecyl dimethyl sulfonium chloride, is exposed to environmental conditions altering the pH value towards neutral pH value, e.g. by rain. The resultant pH shift relatively reduces the water solubility of the trialkyl sulfonium chloride, preferably octadecyl dimethyl sulfonium chloride, thereby decreasing its tendency to be rinsed off.

Preferably, the composition according to the invention is aqueous and has a pH value within the range of from 2 to 14; preferably 3 to 13; more preferably 8 to 13.

In preferred embodiments, the composition according to the invention has a pH value of at least 2.5, preferably at least 3.0, preferably at least 3.5, preferably at least 4.0, preferably at least 4.5, preferably at least 5.0, preferably at least 5.5, preferably at least 6.0, preferably at least 6.5, preferably at least 7.0, preferably at least 7.5, preferably at least 8.0, preferably at least 8.5, preferably at least 9.0, preferably at least 9.5, preferably at least 10, preferably at least 10.5, preferably at least 11.

In preferred embodiments, the composition according to the invention has a pH value of at most 14, preferably at most 13.5, preferably at most 13, preferably at most 12.5, preferably at most 12, preferably at most 11.5, preferably at most 11.0, preferably at most 10.5, preferably at most 10.0, preferably at most 9.5, preferably at most 9.0, preferably at most 8.5, preferably at most 8.0, preferably at most 7.5.

In preferred embodiments, the composition according to the invention has a pH value within the range of $2.0\pm1.0$, preferably $3.0\pm2.0$, preferably $3.0\pm1.0$, preferably $4.0\pm3.0$, preferably $4.0\pm2.0$, preferably $4.0\pm1.0$, preferably $5.0\pm4.0$, preferably $5.0\pm3.0$, preferably $5.0\pm2.0$, preferably $5.0\pm1.0$, preferably $6.0\pm5.0$, preferably $6.0\pm4.0$, preferably $6.0\pm3.0$, preferably $6.0\pm2.0$, preferably $6.0\pm1.0$, preferably $7.0\pm6.0$, preferably $7.0\pm5.0$, preferably $7.0\pm4.0$, preferably $7.0\pm3.0$, preferably $7.0\pm2.0$, preferably $7.0\pm1.0$, preferably $8.0\pm5.0$, preferably $8.0\pm4.0$, preferably $8.0\pm3.0$, preferably $8.0\pm2.0$, preferably $8.0\pm1.0$, preferably $9.0\pm4.0$, preferably $9.0\pm3.0$, preferably $9.0\pm2.0$, preferably $9.0\pm1.0$, preferably $10\pm3.0$, preferably $10\pm2.0$, preferably $10\pm1.0$, preferably $11\pm2.0$, preferably $11\pm1.0$, preferably $12\pm1.0$.

In a preferred embodiment, the composition according to the invention has a pH value within the range of $3.0\pm2.5$, more preferably $3.0\pm2.0$, still more preferably $3.0\pm1.5$, yet more preferably $3.0\pm1.0$, even more preferably $3.0\pm0.5$. In another preferred embodiment, the composition according to the invention has a pH value within the range of $4.0\pm3.5$, more preferably $4.0\pm3.0$, still more preferably $4.0\pm2.5$, yet more preferably $4.0\pm2.0$, and most preferably $4.0\pm1.0$. In still another preferred embodiment, the composition according to the invention has a pH value within the range of $5.0\pm4.0$, more preferably $5.0\pm3.0$, still more preferably $5.0\pm2.0$, and most preferably $5.0\pm1.0$. In yet another preferred embodiment, the composition according to the invention has a pH value within the range of $6.0\pm5.0$, more preferably $6.0\pm4.0$, still more preferably $6.0\pm3.0$, even more preferably $6.0\pm2.0$, and most preferably $6.0\pm1.0$. In a preferred embodiment, the composition according to the invention has a pH value within the range of $7.0\pm6.0$, more preferably $7.0\pm5.0$, still more preferably $7.0\pm4.0$, yet more preferably $7.0\pm3.0$, even more preferably $7.0\pm2.0$, and most preferably $7.0\pm1.0$. In another preferred embodiment, the composition according to the invention has a pH value within the range of $8.0\pm5.0$, more preferably $8.0\pm4.0$, still more preferably $8.0\pm3.0$, yet more preferably $7.0\pm2.0$, and most preferably $8.0\pm1.0$. In still another preferred embodiment, the composition according to the invention has a pH value within the range of $9.0\pm4.0$, more preferably $9.0\pm3.0$, still more preferably $9.0\pm2.0$, and most preferably $9.0\pm1.0$. In yet another preferred embodiment, the composition according to the invention has a pH value within the range of $10\pm4.0$, more preferably $10\pm3.0$, still more preferably $10\pm2.0$, and most preferably $10\pm1.0$. In another preferred embodiment, the composition according to the invention has a pH value within the range of $11\pm3.0$, more preferably $11\pm2.0$, still more preferably $11\pm1.0$. In still another preferred embodiment, the composition according to the invention has a pH value within the range of $12\pm2.0$, more preferably $12\pm1.0$.

The composition according to the invention comprises an electrolyte; preferably a salt of a cation with an anion. There is indication that electrolytes, especially chloride salts, may enhance the pesticidal activity, preferably the fungicidal activity, of the trialkyl sulfonium salt of formula (A). For the purpose of the specification, an "electrolyte" is a substance that, when dissolved in water, dissociates to ionic species.

It is contemplated that the composition according to the invention may comprise a mixture of two or more electrolytes.

In preferred embodiments, the electrolyte comprises or consists of a salt of a cation selected from the group

consisting of $NH_4^+$, $Li^+$, $Na^+$, $K^+$, $Ca^{2+}$, $Mg^{2+}$, $Mn^{2+}$, $Fe^{2+}$, $Fe^{3+}$, $Cu^{2+}$, and $Zn^{2+}$ with an anion.

Preferably, the anion corresponds to $X^{n-}$ of the trialkyl sulfonium salt of formula (A).

In preferred embodiments, the electrolyte comprises or consists of a chloride salt of a cation selected from the group consisting of $NH_4^+$, $Li^+$, $Na^+$, $K^+$, $Ca^{2+}$, $Mg^{2+}$, $Mn^{2+}$, $Fe^{2+}$, $Fe^{3+}$, $Cu^{2+}$, and $Zn^{2+}$.

In preferred embodiments, the electrolyte comprises or consists of a salt of an ammonium cation or an alkali metal cation with an anion.

Preferably, the ammonium cation or the alkali metal cation is selected from $NH_4^+$, $Li^+$, $Na^+$, and $K^+$.

In preferred embodiments, the electrolyte comprises or consists of a salt of an alkaline earth metal cation with an anion.

Preferably, the alkaline earth metal cation is selected from $Ca^{2+}$ and $Mg^{2+}$.

In preferred embodiments, the electrolyte comprises or consists of a salt of a transition metal cation with an anion.

Preferably, the transition metal cation is selected from $Mn^{2+}$, $Fe^{2+}$, $Fe^{3+}$, $Cu^{2+}$, and $Zn^{2+}$.

In preferred embodiments, the electrolyte comprises or consists of a salt of a heteroaryl cation with an anion.

Preferably, the heteroaryl cation is a pyridinium cation.

In preferred embodiments, the electrolyte comprises or consists of a salt of a cation with an anion $Y^{m-}$. Preferably, $Y^{m-}$ is independently as defined for $X^{n-}$ of the trialkyl sulfonium salt of formula (A) above. In preferred embodiments $Y^{m-}$ corresponds to $X^{n-}$ of the trialkyl sulfonium salt of formula (A). In other preferred embodiments $Y^{m-}$ differs from $X^{n-}$ of the trialkyl sulfonium salt of formula (A).

In particularly preferred embodiments, the trialkyl sulfonium salt is n-octadecyl dimethyl sulfonium chloride and the electrolyte is NaCl.

Preferably, at 25°C the composition according to the invention preferably has an electrical conductivity of at least 5.0 $mS \cdot cm^{-1}$; preferably at least 10 $mS \cdot cm^{-1}$, preferably at least 15 $mS \cdot cm^{-1}$, preferably at least 20 $mS \cdot cm^{-1}$, preferably at least 25 $mS \cdot cm^{-1}$, preferably at least 30 $mS \cdot cm^{-1}$, preferably at least 35 $mS \cdot cm^{-1}$, preferably at least 40 $mS \cdot cm^{-1}$, preferably at least 45 $mS \cdot cm^{-1}$, preferably at least 50 $mS \cdot cm^{-1}$, preferably at least 60 $mS \cdot cm^{-1}$, preferably at least 70 $mS \cdot cm^{-1}$, preferably at least 80 $mS \cdot cm^{-1}$, preferably at least 90 $mS \cdot cm^{-1}$, preferably at least 100 $mS \cdot cm^{-1}$, preferably at least 120 $mS \cdot cm^{-1}$, preferably at least 140 $mS \cdot cm^{-1}$, preferably at least 160 $mS \cdot cm^{-1}$, preferably at least 180 $mS \cdot cm^{-1}$, preferably at least 200 $mS \cdot cm^{-1}$, preferably at least 225 $mS \cdot cm^{-1}$, preferably at least 250 $mS \cdot cm^{-1}$, preferably at least 275 $mS \cdot cm^{-1}$, preferably at least 300 $mS \cdot cm^{-1}$, preferably at least 325 $mS \cdot cm^{-1}$, preferably at least 350 $mS \cdot cm^{-1}$, preferably at least 375 $mS \cdot cm^{-1}$. Preferably, electrical conductivity is determined according to ASTM D1125 - 14.

Preferably, the weight content of the electrolyte in the composition is greater than the weight content of the trialkyl sulfonium salt of formula (A).

Preferably, the weight content of the electrolyte in the composition is less than the weight content of the trialkyl sulfonium salt of formula (A).

Preferably, the molar ratio of the electrolyte in the composition to the trialkyl sulfonium salt of formula (A) is within the range of from 6.0:1.0 to 1.0:4.0, preferably 5.0:1.0 to 1.0:3.0, more preferably 4.0:1.0 to 1.0:2.0, still more preferably 2.0:1.0 to 1.0:1.0.

The content of the electrolyte is at least 0.5 wt.-%, preferably at least 1.0 wt.-%, preferably at least 2.5 wt.-%, preferably at least 5 wt.-%, preferably at least 7.5 wt.-%, preferably at least 10 wt.-%, preferably at least 12.5 wt.-%, preferably at least 15 wt.-%, preferably at least 17.5 wt.-%, preferably at least 20 wt.-%, in each case relative to the total weight of the composition.

In preferred embodiments, the content of the electrolyte is at most 97.5 wt.-%, preferably at most 95 wt.-%, preferably at most 92.5 wt.-%, preferably at most 90 wt.-%, preferably at most 87.5 wt.-%, preferably at most 85 wt.-%, preferably at most 82.5 wt.-%, preferably at most 80 wt.-%, in each case relative to the total weight of the composition.

In preferred embodiments, the content of the electrolyte is within the range of 10±5.0 wt.-%, preferably 20±15 wt.-%, preferably 20±10 wt.-%, preferably 20±5.0 wt.-%, preferably 30±25 wt.-%, preferably 30±20 wt.-%, preferably 30 ±15 wt.-%, preferably 30±10 wt.-%, preferably 30±5.0 wt.-%, preferably 40±35 wt.-%, preferably 40±30 wt.-%, preferably 40±25 wt.-%, preferably 40±20 wt.-%, preferably 40±15 wt.-%, preferably 40±10 wt.-%, preferably 40 ±5.0 wt.-%, preferably 50±45 wt.-%, preferably 50±40 wt.-%, preferably 50±35 wt.-%, preferably 50±30 wt.-%, preferably 50±25 wt.-%, preferably 50±20 wt.-%, preferably 50±15 wt.-%, preferably 50±10 wt.-%, preferably 50 ±5.0 wt.-%, preferably 60±35 wt.-%, preferably 60±30 wt.-%, preferably 60±25 wt.-%, preferably 60±20 wt.-%, preferably 60±15 wt.-%, preferably 60±10 wt.-%, preferably 60±5.0 wt.-%, preferably 70±25 wt.-%, preferably 70 ±20 wt.-%, preferably 70±15 wt.-%, preferably 70±10 wt.-%, preferably 70±5.0 wt.-%, preferably 80±15 wt.-%, preferably 80±10 wt.-%, preferably 80±5.0 wt.-%, preferably 90±5.0 wt.-%, in each case relative to the total weight of the composition.

The content of the trialkyl sulfonium salt is more than 0.1 wt.-%, relative to the total weight of the composition.

In preferred embodiments, the content of the trialkyl sulfonium salt is at least 0.5 wt.-%, preferably at least 1.0 wt.-%, preferably at least 2.5 wt.-%, preferably at least 5 wt.-%, preferably at least 7.5 wt.-%, preferably at least 10 wt.-%, preferably at least 12.5 wt.-%, preferably at least 15 wt.-%, preferably at least 17.5 wt.-%, preferably at least 20 wt.-%, in

each case relative to the total weight of the composition.

In preferred embodiments, the content of the trialkyl sulfonium salt is at most 97.5 wt.-%, preferably at most 95 wt.-%, preferably at most 92.5 wt.-%, preferably at most 90 wt.-%, preferably at most 87.5 wt.-%, preferably at most 85 wt.-%, preferably at most 82.5 wt.-%, preferably at most 80 wt.-%, in each case relative to the total weight of the composition.

Preferably, the content of the trialkyl sulfonium salt is within the range of from 10 to 80 wt.-%, relative to the total weight of the composition.

In preferred embodiments, the content of the trialkyl sulfonium salt is within the range of 10±5.0 wt.-%, preferably 20±15 wt.-%, preferably 20±10 wt.-%, preferably 20±5.0 wt.-%, preferably 30±25 wt.-%, preferably 30±20 wt.-%, preferably 30±15 wt.-%, preferably 30±10 wt.-%, preferably 30±5.0 wt.-%, preferably 40±35 wt.-%, preferably 40±30 wt.-%, preferably 40±25 wt.-%, preferably 40±20 wt.-%, preferably 40±15 wt.-%, preferably 40±10 wt.-%, preferably 40 ±5.0 wt.-%, preferably 50±45 wt.-%, preferably 50±40 wt.-%, preferably 50±35 wt.-%, preferably 50±30 wt.-%, preferably 50±25 wt.-%, preferably 50±20 wt.-%, preferably 50±15 wt.-%, preferably 50±10 wt.-%, preferably 50 ±5.0 wt.-%, preferably 60±35 wt.-%, preferably 60±30 wt.-%, preferably 60±25 wt.-%, preferably 60±20 wt.-%, preferably 60±15 wt.-%, preferably 60±10 wt.-%, preferably 60±5.0 wt.-%, preferably 70±25 wt.-%, preferably 70 ±20 wt.-%, preferably 70±15 wt.-%, preferably 70±10 wt.-%, preferably 70±5.0 wt.-%, preferably 80±15 wt.-%, preferably 80±10 wt.-%, preferably 80±5.0 wt.-%, preferably 90±5.0 wt.-%, in each case relative to the total weight of the composition.

In other preferred embodiments, the composition according to the invention is a solid.

In preferred embodiments of the composition according to the invention, the content of the trialkyl sulfonium salt is at least 2.5 μg/g; preferably at least 5.0 μg/g, preferably at least 7.5 μg/g, preferably at least 10 μg/g, preferably at least 15 μg/g, preferably at least 20 μg/g, preferably at least 25 μg/g, preferably at least 30 μg/g, preferably at least 40 μg/g, preferably at least 50 μg/g, preferably at least 60 μg/g, preferably at least 70 μg/g, preferably at least 80 μg/g, preferably at least 90 μg/g, in each case relative to the total weight of the composition.

In preferred embodiments of the composition according to the invention, the content of the trialkyl sulfonium salt is at most 200 μg/g, preferably at most 190 μg/g, preferably at most 180 μg/g, preferably at most 170 μg/g, preferably at most 160 μg/g, preferably at most 150 μg/g, preferably at most 140 μg/g, preferably at most 130 μg/g, preferably at most 120 μg/g, preferably at most 110 μg/g, preferably at most 100 μg/g, preferably at most 90 μg/g, preferably at most 80 μg/g, preferably at most 70 μg/g, preferably at most 60 μg/g, preferably at most 50 μg/g, preferably at most 40 μg/g, preferably at most 30 μg/g, preferably at most 20 μg/g, preferably at most 10 μg/g, in each case relative to the total weight of the composition.

Besides the trialkyl sulfonium salt and the preferably present agriculturally acceptable carrier, the composition according to the invention may further comprise one or more additives. Preferred additives include but are not limited to pH buffering agents, thickening agents, deposition agents (stickers), water conditioning agents, wetting agents, spreading agents, humectants, leaf cuticle and/or cell membrane penetration aids, surfactants, plant growth enhancers, foaming agents, defoaming agents, drift control agents, spray drift reducing agents, evaporation reducing agents, dyes, UV absorbents, and combinations thereof. Such additives are known to the skilled person and commercially available, as individual compounds or as mixtures (masterbatches). They may be contained in the composition according to the invention in usual amounts.

The additives may be in the form of a crop protectant spray additive and/or surfactants. The additives may increase the permeability of plant cuticles and/or cell membranes. The additives may be non-ionic spreading and penetration aids; and/or act to reduce surface tension of the composition.

The additives may enhance the fungicidal activity of the trialkyl sulfonium salt, for example by increasing permeability of cuticles and/or cell membranes. The additives may enhance the fungicidal activity of the trialkyl sulfonium salt, for example by increasing permeability of plant cuticles and/or cell membranes.

In preferred embodiments, the composition according to the invention further comprises a surfactant. Surfactants reduce surface tension in the spray droplets of the composition, when the composition is applied to a material (such as a surface, plant leaf, etc.), which aids the composition to spread out and cover the target material with a thin film, leading to more effective or quicker absorption of the composition into the material. Surfactants may also affect the absorption of the composition when sprayed on stems or leaves of a plant, by changing the viscosity and crystalline structure of waxes on leaf and stem surfaces, so that they are more easily penetrated by the trialkyl sulfonium salt. The surfactant may be chosen to enhance the antifungal properties of the composition, through any one or more of:

a) making the composition spread more uniformly on a material to which the composition is applied;

b) increasing retention (or 'sticking') of the composition on the material;

c) for plant or crop protection applications, increasing penetration of the composition through hairs, scales, or other leaf surface structures of a plant;

d) preventing crystallization of the composition; and/or

e) slowing the drying of the composition.

It is contemplated that the composition according to the invention comprises a single surfactant in addition to the trialkyl sulfonium salt, or a combination of two or more surfactants. Each surfactant may independently be selected from non-ionic surfactants, ionic surfactants, amphoteric surfactants, a zwitterionic surfactants, and combinations thereof.

Non-ionic surfactants are generally biodegradable and are compatible with many fertilizers. Some non-ionic surfactants are waxy solids and require a liquid carrier (co-solvent such as alcohol or glycol) to solubilize into liquids. Glycol carriers are generally preferred over alcohols, as the latter are flammable, evaporate quickly, and may increase the number of fine spray droplets (making the formulation likely to drift when sprayed). Preferred non-ionic surfactants include silicone surfactants (such as siloxanes and organosiloxanes). Silicone surfactants significantly reduce surface tension of the composition, enabling the composition, in use, to form a thin layer on a leaf or stem surface of a plant. Silicone surfactants also decrease surface tension and may allow the composition to penetrate the stomates of a plant leaf. Silicone surfactants also provide a protective effect to the compositions of the invention by making the compositions very difficult to wash off after they are applied. Silicone surfactants can also influence the amount/rate of absorption of the trialkyl sulfonium salt through the cuticle of a leaf. Preferred non-ionic surfactants further include carbamide surfactants (urea surfactants). The carbamide surfactants may comprise monocarbamide dihydrogen sulfate, for example.

Suitable ionic surfactants may be selected from cationic surfactants and anionic surfactants. Preferred cationic surfactants include tallow amine ethoxylates. Preferred anionic surfactants include sulfates, carboxylates, and phosphates attached to lipophilic hydrocarbons, including linear alkylbenzene sulfonates, for example.

Amphoteric surfactants typically function similarly to non-ionic surfactants. Preferred amphoteric surfactants include lecithin (phosphatidylcholine) and amidopropylamines, for example.

Wetting agents or spreading agents lower surface tension in the compositions, and allow the compositions to form a large, thin layer on the leaves and stems of a target plant. Preferred wetting agents or spreading agents include non-ionic surfactants that are preferably diluted with water, alcohol, or glycols; polyglycerol fatty esters; and polyglycols.

Drift control agents or spray drift control agents are preferably used to reduce spray drift of the composition, for example when the composition is sprayed onto a plant, which most often results when fine spray droplets (< 150 μm diameter) are carried away from the target area by air currents. Drift control agents alter the viscoelastic properties of the spray solution, yielding a coarser spray with greater mean droplet sizes and weights, and minimizing the number of small, easily-airborne droplets. Suitable drift control agents include polymers such as polyacrylamides, polysaccharides and gums.

Preferred deposition agents (stickers) include film-forming vegetable gels, emulsifiable resins, emulsifiable mineral oils, waxes, and water-soluble polymers, for example. Deposition agents may be used to reduce losses of composition from the target plant, due to the evaporation of the composition from the target surface, or beading-up and falling off of the composition. Deposition agents are particularly suitable for compositions of the invention in the form of dry (wettable) powder and granule formulations.

De-foaming and antifoam agents reduce, suppress or destroy the formation of foam in containers in which the compositions of the invention may be contained. Preferred de-foaming agents include oils, polydimethylsiloxanes and other silicones, alcohols, stearates and glycols, for example.

The composition according to the invention may comprise one or more further antifungal agents.

Preferred further antifungal agents are independently of one another selected from

(1) inhibitors of the ergosterol synthesis,
(2) inhibitors of the respiratory chain at complex I or II,
(3) inhibitors of the respiratory chain at complex III,
(4) inhibitors of the mitosis and cell division,
(5) compounds capable of having a multisite action,
(6) compounds capable of inducing a host defense,
(7) inhibitors of the amino acid and/or protein biosynthesis,
(8) inhibitors of the ATP production,
(9) inhibitors of the cell wall synthesis,
(10) inhibitors of the lipid and membrane synthesis,
(11) inhibitors of the melanine biosynthesis,
(12) inhibitors of the nucleic acid synthesis,
(13) inhibitors of the signal transduction,
(14) compounds capable of acting as uncoupler, and
(15) other fungicides.

Preferred further antifungal agents are independently of one another selected from azoles; amino-derivatives; strobilurins; specific anti-oidium compounds; aniline-pyrimidines; benzimidazoles and analogues; dicarboximides; polyhalogenated fungicides; systemic acquired resistance (SAR) inducers; phenylpyrroles; acylalanines; anti-peronosporic compounds; dithiocarbamates; arylamidines; phosphorous acid and its derivatives; fungicidal copper compounds; plant-based oils (botanicals); chitosan; sulfur-based fungicides; fungicidal amides; and nitrogen heterocycles; or any combination thereof.

The composition according to the invention as described above is preferably a pre-mix concentrate, more preferably a pre-mix suspension concentrate, still more preferably an aqueous pre-mix suspension concentrate.

Before use, the pre-mix concentrate according to the invention is preferably diluted, preferably with water, by between 2 and 500 times, such as 10 times, preferably 20 times, preferably 50 times, preferably 100 times, preferably 200 times, preferably 250 times.

Another aspect of the present disclosure relates to an agricultural composition, preferably a ready-to-use aqueous composition comprising:

(i) the composition according to the invention as described above; and
(ii) a diluent, preferably water.

Thus, carrier and diluent may both be water. For the purpose of the specification different terms are used, while in the agricultural composition thus prepared, depending upon the individual situation, it may not be possible any more to distinguish between diluent and carrier.

Another aspect of the present disclosure relates to a method for the preparation of an agricultural composition, preferably a ready-to-use aqueous composition comprising adding a diluent, preferably water to the composition according to the invention as described above.

All preferred embodiments of the composition according to the invention as described above analogously apply to the agricultural composition according to the present disclosure. The essential difference between the composition according to the invention, i.e. preferably the pre-mix concentrate, more preferably a pre-mix suspension concentrate, still more preferably an aqueous pre-mix suspension concentrate as described above on the one hand, and the agricultural composition according to the present disclosure on the other hand is the content of the ingredients, relative to the total weight of the composition and relative to the total weight of the agricultural composition. While adding diluent increases the total weight of the agricultural composition, the content of its ingredients is relatively decreased. When the diluent is identical to the carrier or to one of the constituents of the carrier, the content of carrier is relatively increased by adding further carrier (i.e. diluent).

In preferred embodiments of the agricultural composition according to the present disclosure, the content of the trialkyl sulfonium salt is at least 2.5 μg/ml; preferably at least 5.0 μg/ml, preferably at least 7.5 μg/ml, preferably at least 10 μg/ml, preferably at least 15 μg/ml, preferably at least 20 μg/ml, preferably at least 25 μg/ml, preferably at least 30 μg/ml, preferably at least 40 μg/ml, preferably at least 50 μg/ml, preferably at least 60 μg/ml, preferably at least 70 μg/ml, preferably at least 80 μg/ml, preferably at least 90 μg/ml, in each case relative to the total weight of the agricultural composition.

In preferred embodiments of the agricultural composition according to the present disclosure, the content of the trialkyl sulfonium salt is at most 200 μg/ml, preferably at most 190 μg/ml, preferably at most 180 μg/ml, preferably at most 170 μg/ml, preferably at most 160 μg/ml, preferably at most 150 μg/ml, preferably at most 140 μg/ml, preferably at most 130 μg/ml, preferably at most 120 μg/ml, preferably at most 110 μg/ml, preferably at most 100 μg/ml, preferably at most 90 μg/ml, preferably at most 80 μg/ml, preferably at most 70 μg/ml, preferably at most 60 μg/ml, preferably at most 50 μg/ml, preferably at most 40 μg/ml, preferably at most 30 μg/ml, preferably at most 20 μg/ml, preferably at most 10 μg/ml, in each case relative to the total weight of the agricultural composition.

Another aspect of the invention relates to the non-therapeutic use of a composition according to the invention as described above as a pesticide, preferably as a fungicide. The use according to the invention preferably encompasses contacting the pests, their habitat, materials or plants to be protected against attack by the pests, the soil, the lotus where the plant is growing, the lotus where the plant is to grow or propagation material with a pesticidally effective amount of a composition according to the invention.

Another aspect of the invention relates to a non-therapeutic method for controlling or combating pests and/or improving plant health comprising contacting the pests, their habitat, materials or plants to be protected against attack by the pests, the soil, the lotus where the plant is growing, the lotus where the plant is to grow or propagation material with a pesticidally effective amount of a composition according to the invention as described above.

Preferably, the pests are fungi; preferably harmful fungi; preferably phytopathogenic harmful fungi.

In preferred embodiments, the fungi are selected from the group consisting of

(a) *Opisthosporidia*; preferably selected from *Aphelidea, Rozellidea* and *Microsporidia*;

(b) *Chytridiomycota*; preferably selected from *Chytridiomycetes, Monoblepharidomycetes* and *Hyaloraphidiomycetes*;
(c) *Neocallimastigomycota*;
(d) *Blastocladiomycota*;
(e) *Zoopagomycota*; preferably selected from *Zoopagomycotina, Entomophthoromycotina* (e.g. *Basidiobolomycetes, Neozygitomycetes, Entomophthoromycetes*) and *Kickxellomycotina*;
(f) *Mucoromycota*; preferably selected from *Mortierellomycotina* and *Mucoromycotina*;
(g) *Glomeromycota*; preferably selected from *Paraglomerales, Archaeosporales, Diversisporales* and *Glomerales;*
(h) *Basidiomycota*; preferably selected from *Pucciniomycotina* (e.g. *Agaricostilbomycetes, Atractiellomycetes, Classiculomycetes, Cryptomycocolacomycetes, Cystobasidiomycetes, Microbotryomycetes, Mixiomycetes, Pucciniomycetes, Spiculogloeomycetes, Tritirachiomycetes), Ustilagomycotina* (e.g. *Ustilaginomycetes, Exobasidiomycetes,* Malasseziomycetes, *Moniliellomycetes*), and *Agaricomycotina* (e.g. *Tremellomycetes, Dacrymycetes, Agaricomycetes*);
(i) *Ascomycota*; preferably selected from *Taphrinomycotina* (e.g. *Taphrinomycetes, Neolectomycetes, Schizosaccharomycetes, Pneumocystidomycetes, Archaeorhizomycetes*), *Saccharomycotina* (e.g. *Saccharomycetes, Saccharomycetales*) and *Pezizomycotina* (e.g. *Arthoniomycetes, Coniocybomycetes, Dothideomycetes, Eurotiomycetes, Geoglossomycetes, Laboulbeniomycetes, Lecanoromycetes, Leothiomycetes, Lichinomycetes, Orbiliomycetes, Pezizomycetes, Sordariomycetes, Xylonomycetes*);

and combinations thereof.

Preferred plant pathogenic fungi and oomycete species against which the composition according to the invention can be used include *Basidiomycetes, Ascomycetes, Deuteromycetes* or imperfect fungi, *Chytridiomycetes, Zygomycetes, Microspolidia* and *Oomycetes.* Amongst these, but not exclusively, are *Puccinia* spp., *Ustilago* spp , *Tilletia* spp., *Uromyces* spp., *Phakopsora* spp., *Rhizoctonia* spp., *Erysiphe* spp., *Sphaerotheca* spp., *Podosphaera* spp., *Uncinula* spp., *Helminthosporium* spp., *Rhynchosporium* spp., *Pyrenophora* spp., *Monilinia* spp., *Sclerotinia* spp., *Septoria* spp. (*Mycosphaerella* spp., *Zymoseptoria* spp.), *Venturia* spp., *Botrytis* spp., *Alternaria* spp., *Fusarium* spp., *Cercospora* spp., *Cercosporella herpotrichoides, Colletotrichum* spp., *Pyricularia oryzae, Sclerotium* spp., *Phytophthora* spp., *Pythium* spp., *Plasmopara viticola, Peronospora* spp., *Pseudoperonospora cubensis, Bremia lactucae.*
In preferred embodiments, the fungi belong to division *Ascomycota,* preferably to class *Dothideomycetes,* more preferably to order *Capnodiales,* still more preferably to family *Mycosphaerellaceae,* yet more preferably to genus *Septoria,* and most preferably are species *Septoria tritici.*
In preferred embodiments, the fungi belong to phylum *Ascomycota,* preferably to class *Dothideomycetes,* more preferably to order *Capnodiales,* still more preferably to family *Mycosphaerellaceae,* yet more preferably to genus *Zymoseptoria,* and most preferably are species *Zymoseptoria tritici.*
In preferred embodiments, the fungi belong to phylum *Ascomycota,* preferably to class *Dothideomycetes,* more preferably to order *Pleosporales,* still more preferably to family *Venturiaceae,* yet more preferably to genus *Venturia,* and most preferably are species *Venturia inaequalis.*
In preferred embodiments, the fungi belong to clade SAR, preferably to phylum *Oomycota,* more preferably to order *Peronosporales,* still more preferably to family *Peronosporaceae.* Preferably, the fungi belong to genus *Plasmopara,* preferably are species *Plasmopara viticola.* Preferably, the fungi belong to genus *Phytophthora,* preferably are species *Phytophthora infestans.*

Specific fungal species infections, against which the composition according to the invention can be used include: *Ensiphe graminis* in cereals, *Zymoseptoria tritici* in cereals (especially wheat), *Magnaporthe oryzae* in cereals (especially rice), *Erysiphe cichoracearum* and *Sphaerotheca fuliginea* in cucurbits, *Podosphaera leucotricha* in apples, *Uncinula necator* in vines, *Venturia inaequalis* (scab) in apples, *Helminthosporium* species in cereals, *Septoria nodorum* in wheat, *Botrytis cinerea* (gray mold) in strawberries and grapes, *Cercospora arachidicola* in groundnuts, *Pseudocercosporella herpotrichoides* in wheat and barley, *Pyricularia oryzae* in rice, *Fusarium* and *Verticillium* species in various plants, and *Alternaria* species in fruit and vegetables.

Examples of plant fungal diseases against which the composition according to the invention can be used include, but are not limited to: blotch (particularly wheat blotch), rot, Fusarium wilt disease, canker rot, black root rot, Thielaviopsis root rot, blast (particularly rice blast), cottony rot, smuts, soybean rust, cereal rust, potato blight, mildew, clubroot, anthracnose, damping-off, Rhizictonia rot, bottom rot, cavity spot, target spot, leaf blight, septoria spot, ling spot, black leg, stem blight, black knot, ergot, leaf blister, scab, snow mold, sooty mold and Verticillium wilt.

The use according to the invention and the method according to the invention preferably encompasses treatment of a plant pathogenic disease which is preferably caused by a fungal disease. The plant pathogenic disease may be fungal disease of a plant or its seeds, such as, for example cereals (wheat, barley, lye, oats, rice, maize, sorghum, etc.), fruit trees (apples, pears, plums, peaches, almonds, cherries, bananas, grapes, strawberries, raspberries, blackberries, etc.), citrus trees (oranges, lemons, mandarins, grapefruit, etc.), legumes (beans, peas, lentils, soybean, etc.), vegetables (spinach,

lettuce, asparagus, cabbage, carrots, onions, tomatoes, potatoes, eggplants, peppers, etc.), cucurbitaceae (pumpkins, zucchini, cucumbers, melons, watermelons, etc.), oleaginous plants (sunflower, rape, peanut, castor, coconut, etc.), tobacco, coffee, tea, cocoa, sugar beet, sugar cane, cotton, or horticultural plants.

Preferably, the plant is selected from the group consisting of agricultural plants, horticultural plants, ornamental plants, and silvicultural plants. Preferably, the plant is a field crop.

For the purpose of the specification, the term "plant" is synonymous to the term "crop" which is to be understood as a plant of economic importance and/or a men-grown plant. The term "plant" as used herein includes all parts of a plant such as germinating seeds, emerging seedlings, herbaceous vegetation as well as established woody plants including all belowground portions (such as the roots) and above-ground portions.

In preferred embodiments, the plant is an agricultural plant. For the purpose of the specification, "agricultural plants" are plants of which a part (e.g. seeds) or all is harvested or cultivated on a commercial scale or which serve as an important source of feed, food, fibers (e.g. cotton, linen), combustibles (e.g. wood, bioethanol, biodiesel, biomass) or other chemical compounds. Preferred agricultural plants are for example a) cereals, e.g. wheat, rye, barley, triticale, oats, sorghum or rice, beet, e.g. sugar beet or fodder beet; b) fruits, such as pomes, stone fruits or soft fruits, e.g. apples, pears, plums, peaches, almonds, cherries, strawberries, raspberries, blackberries or gooseberries; leguminous plants, such as lentils, peas, alfalfa or soybeans; c) oil plants, such as rape, oil-seed rape, canola, linseed, mustard, olives, sunflowers, coconut, cocoa beans, castor oil plants, oil palms, ground nuts or soybeans; d) cucurbits, such as squashes, cucumber or melons; e) fiber plants, such as cotton, flax, hemp or jute; f) citrus fruit, such as oranges, lemons, grapefruits or mandarins; g) vegetables, such as spinach, lettuce, asparagus, cabbages, carrots, onions, tomatoes, potatoes, cucurbits or paprika; h) lauraceous plants, such as avocados, cinnamon or camphor; i) energy and raw material plants, such as corn, soybean, rape, canola, sugar cane or oil palm; j) tobacco; k) nuts; l) coffee; m) tea; n) bananas; o) vines (table grapes and grape juice grape vines); p) hop; q) turf; and r) natural rubber plants.

Preferred agricultural plants are field crops such as potatoes, sugar beets, cereals such as wheat, rye, barley, oats, sorghum, rice, corn, cotton, rape, oilseed rape and canola, legumes such as soybeans, peas and field beans, sunflowers, sugar cane, vegetables such as cucumbers, tomatoes, onions, leeks, lettuce and squashes. Preferred agricultural plants are selected from soybean, sunflower, corn, cotton, canola, sugar cane, sugar beet, pome fruit, barley, oats, sorghum, rice and wheat. Preferred agricultural plants are selected from soybean, sunflower, corn, cotton, canola, sugar cane, sugar beet, pome fruit, barley, oats, sorghum, rice and wheat. Preferred agricultural plants are selected from wheat, barley, corn, soybean, rice, canola and sunflower. Preferred agricultural plants are selected from wheat, barley, oats, rice, sorghum, plantain, maize, potatoes, vegetables and fruits.

In preferred embodiments, the plant is a horticultural plant. For the purpose of the specification, "horticultural plants" are plants which are commonly used in horticulture, e.g. the cultivation of ornamentals, vegetables and/or fruits. Examples for ornamentals are turf, geranium, pelargonia, petunia, begonia and fuchsia. Examples for vegetables are potatoes, tomatoes, peppers, cucurbits, cucumbers, melons, watermelons, garlic, onions, carrots, cabbage, beans, peas and lettuce and more preferably from tomatoes, onions, peas and lettuce. Examples for fruits are apples, pears, cherries, strawberry, citrus, peaches, apricots and blueberries.

In preferred embodiments, the plant is an ornamental plant. For the purpose of the specification, "ornamental plants" are plants which are commonly used in gardening, e.g. in parks, gardens and on balconies. Examples are turf, geranium, pelargonia, petunia, begonia and fuchsia.

In preferred embodiments, the plant is a silvicultural plant. For the purpose of the specification, "silvicultural plants" are trees, more specifically trees used in reforestation or industrial plantations. Industrial plantations generally serve for the commercial production of forest products, such as wood, pulp, paper, rubber tree, Christmas trees, or young trees for gardening purposes. Examples for silvicultural plants are conifers, like pines, in particular Pinus spec., fir and spruce, eucalyptus, tropical trees like teak, rubber tree, oil palm, willow (Salix), in particular Salix spec., poplar (cottonwood), in particular Populus spec., beech, in particular Fagus spec., birch, oil palm and oak.

The trialkyl sulfonium salts according to the invention may be synthesized along standard routes for the synthesis of sulfonium compounds which are described in the literature. For example, a fatty alcohol having the desired chain length of residue R3 ($C_{17-32}$-alkyl-OH) may be converted into the corresponding alkyl salt $C_{17-32}$-alkyl-Cl e.g. by reaction with $SOCl_2$ or $SO_2Cl_2$. The thus obtained alkyl salt may be reacted with an alkylthiol ($C_{1-3}$-alkyl-SH) yielding the thioether $C_{17-32}$-alkyl-S-$C_{1-4}$-alkyl. Subsequently, the thus obtained thioether may be alkylated by reaction with a suitable alkylating agent such as $C_{1-3}$-alkyl-I yielding the sulfonium iodide $C_{17-32}$-alkyl-$S^+$($C_{1-4}$-alkyl)$_2$ $I^-$. The corresponding salt can be obtained by metathesis with an excess of a suitable salt such as NaCl or by another method for ion exchange such as ion exchange chromatography.

The following examples further illustrate the invention but are not to be construed as limiting its scope:

Example 1 - grapevine downy mildew caused by *Plasmopara viticola*

It was investigated whether octadecyl dimethyl sulfonium chloride (ODS-Cl) according to the invention can

provide a significant level of protection towards *P. viticola* on detached leaves of grapevine compared to the two reference fungicides, namely Folpet 80WG and Dodine (Technical product). For that purpose, a dose effect curve and the $ED_{50}$ were determined.

The species *Plasmopara viticola* belongs to genus *Plasmopara* within family *Peronosporaceae* within order *Peronosporales* within phylum *Oomycota* within clade SAR.

Materials and methods: As fungal strain (pathogen), *Plasmopara viticola,* strain name PvS was used. This strain had been isolated from French untreated vine leaves in 2007. It is known to be susceptible to all fungicides used towards grape downy mildew.

The following fungicide formulations were used:

| Active ingredient | Concentration | Rate (g a.i./ha) | Rate (mg a.i./L or ppm) |
|---|---|---|---|
| Folpet 80WG (Folpan) | 800 g a.i./kg | 1000 | 3333 |
| Dodine | 1000 g a.i./kg | 680 | 2267 |
| ODS-Cl | 1000 g a.i./kg | 300, 150, 30, 15, 3, 0.3 | 1000, 500, 100, 50, 10, 1 |

The formulations were prepared in a volume of water corresponding to 300 L/ha. No surfactant such as Tween or any other compound improving retention on leaves was used.

The timeline of *in planta* experiments was as follows:

(a) 0 day: preventive treatment on detached leaves with hand sprayer (100L/ha); treatment on the abaxial leaf face;
(b) 1 day post-treatment: leaf discs were considered. *P. viticola* inoculation was performed with a calibrated sporangia suspension on the abaxial leaf face; and
(c) 7 days post inoculation: disease severity and intensity were observed.

Step (a) - preventive treatment: Grapevine leaves (*var.* Chardonnay) were taken from young plants and surface disinfected. The abaxial face of each leaf was treated with the fungicide preparations or distilled water (Control) with a hand-sprayer (2 bars) calibrated to deliver 300 L/ha. Two to three leaves were treated for each tested condition. One day post-treatment, leaf discs were cut on untreated or treated grapevine leaves (3 replicates each including at least 7 leaf-discs). Leaf discs were transferred on Petri dishes with the abaxial face up.

Step (b) - *P. viticola* inoculation of grapevine leaf discs: Each leaf disc was inoculated on its abaxial face with a calibrated sporangia suspension of *P. viticola* strain PvS. After inoculation, Petri dishes were placed in a climatic chamber: Temperature of 20°C day/16°C night - Photoperiod of 16 h light/8 h dark and controlled Relative Humidity (RH).

Step (c) - disease assessment : intensity of infection and analysis: Disease assessments were carried out 7 dpi by using the following arbitrary disease rating:

- 0 : No fungal growth
- 1 : Very small lesion with sporulation
- 2 : Sporulating lesion smaller than droplet
- 3 : Sporulating lesion with the same size as the original droplet
- 4 : Sporulating lesion exceeding the size of the droplet

Disease Severity Index (DSI) was determined using the formula:

$$\text{DSI} \quad \frac{\sum(number\ of\ disc\ by\ class * class\ coefficient)}{(Total\ number\ of\ disc) * (Maximal\ class\ coefficient)} * 100$$

The DSI was converted into observed efficiency (OE) by using the formula:

$$OE = ((\beta - \alpha)/\beta) \times 100,$$

wherein $\alpha$ corresponds to the DSI of treated plants (%) and $\beta$ to the DSI of the untreated (control) plants (%)). The values were compared by using a appropriated statistical test using the Xlstat software of statistic test (threshold $\alpha$=5%).

The Disease Severity Index (DSI) was determined using the distribution of the discs and the DSI values were converted into observed efficiency (OE) for each tested product. Treatments were applied preventively one day before inoculation with *P. viticola* strain PvS on grapevine leaf discs in controlled condition. For comparison of the fungicide DSI %,

in the DSI assessment of ODS-Cl 6 rates between 1 mga.i./L (ppm) and 1000 ppm were tested. The reference fungicide Folpet 80WG was tested at 3333 ppm and the reference fungicide Dodine was tested at the field homologated rate of 2267 ppm. All fungicides were used straight preventively 24h against *P. viticola* strain PvS on grapevine leaves discs. The statistical test used was the Fischer LSD parametric test (a=5%).

Results are shown in Figure 1.

As demonstrated, the octadecyl dimethyl sulfonium chloride (ODS-Cl) based fungicide tested straight in this study was efficient to protect grapevine leaf towards downy mildew ($EC_{50}$=70 ppm or 21g a.i./ha). A robust dose effect was observed against *Plasmopara viticola.* The two references that were used at their field recommended rate also showed a full protection against *P. viticola* symptoms development. Both, Folpet 80WG (3333 ppm) and Dodine (2267 ppm) showed a full control towards Downy Mildew, but at a significantly higher dose.

Example 2 - Potato Late Blight caused by *Phytophthora infestans*

It was further investigated whether other oomycete can also be controlled by ODS-Cl, namely *Phytophthora infestans* which is the causal agent of potato (and tomato) late blight.

The species *Phytophthora infestans* belongs to genus *Phytophthora* within family *Peronosporaceae* within order *Peronosporales* within phylum *Oomycota* within clade SAR.

*P. infestans* is an oomycete, a distinct clade from the fungal genius, which spores can be spread by wind and water. Within the asexual cycle Sporangia are released from infected tissue and can, under certain circumstances, germinate and infect the plant tissue (referred as indirect germination). Sporangia can also release the contained zoospores that will germinate and infect the tissue (referred as direct germination). The zoospores are flagellated which permits a greater mobility in water conditions either at leaf surface or in soil. Spores generated from asexual life cycle have high mobility but low viability, on the other hand the sexual reproduction generates oospores that are not mobile by themselves but can persist up to several years in soil under a latent physiological state. At the end of the season the frost will eliminate infected residual plant materials but oospores remain viable being a starting point for a new epidemiological cycle when environmental conditions are more favorable.

Once inside the tissue, the first symptoms start appearing after few days at the foliage levels. Symptoms are often obviously visible at the leaf level but other organs can be infected such as stem, fruits (tomato) or tuber. When infecting the tuber, the disease can sometimes remain latent at harvest and being expressed later during storage. Infected leaves release zoospores under humid conditions which can rapidly spread all over the parcel.

Because the use of fungicide is a major strategy to constrain *P. infestans* spread, the pathogen has developed resistances to some active ingredient in which the mode of action is restricted to a unique cellular target (so-called unisite active ingredients). The use of multisite active ingredients can present a great benefit since their mode of action is less suspected to allow apparition of resistances.

Materials and methods: As fungal strain (pathogen), *Phytophthora infestans,* strain name Pi96 was used. This strain had been isolated from untreated potato European sample. It is known to be susceptible to all fungicides.

The following fungicide formulations were used:

| Active ingredient | Concentration | Rate (g a.i./ha) | Rate (mg a.i./L or ppm) |
|---|---|---|---|
| SYLLIT MAX, Dodine | 544 g a.i./L | 300 | 1000 |
| Dithan Neotec, Mancozeb | 750 g a.i./kg | 300 | 1000 |
| ODS-CL | 1000 g a.i./kg | 300, 150, 30, 15 and 3 | 1000, 500, 100, 50 and 10 |

The timeline of *in planta* experiments was as follows:

(a) (-1) dpi: preventive treatment was performed with a hand sprayer on potato leaves calibrated to deliver an equivalent volume of 300 L/ha;

(b) 0 dpi: *P. infestans* inoculation was performed with a calibrated sporangia suspension on the detached potato leaf (5 leaflets); and

(c) 3 dpi as well as 10 days post inoculation: disease on potato leaflets was assessed.

Step (a) - preventive treatment: Potato leaves (*var.* Bintje) were taken from young plants and surface disinfected. The adaxial face of each detached leaf was treated with the fungicide preparations or distilled water (Control) with a hand-sprayer (2 bars) calibrated to deliver 300 L/ha (Preventive treatment). A minimum of three leaves or at least 18 inoculated leaflets were treated for each tested condition. Preventive treatment 24h: One day post-treatment, leaflets were cut on untreated or treated potato leaves (3 replicates each including at least 5 to 7 leaflets). Leaflets were transferred on Petri

dishes with the abaxial face down.

Step (b) - *P. infestans* inoculation of potato leaflets: The inoculation occurred on the detached treated or untreated leaflets with a droplet of a calibrated sporangia suspension of *P. infestans* strain Pi96. After inoculation, potato leaves were transferred in saturated humidity atmosphere in a climatic chamber under the following conditions: 18°C-14h day/15°C-10h night.

Step (c) - disease assessment : intensity of infection and analysis: Disease assessments were carried out in accordance with Example 1.

With regard to the evaluation of disease severity (DSI) and efficacy of the treatments, the evolution of the DSI (Disease Severity Index) obtained from preventively treated potato leaves inoculated with *P. infestans* 24h after treatment was determined. DSI is the surface of diseased leaflet. The results are compiled in the table here below:

| | Disease Severity Index (%) | | | | Fungicide efficacy (%) at 10 dpi |
|---|---|---|---|---|---|
| | 3 dpi | 5 dpi | 7 dpi | 10 dpi | |
| Water | 8.6 | 14.2 | 32.4 | 82.1 | 0.0 |
| ODS-CL 10 ppm | 10.3 | 18.3 | 39.7 | 97.8 | 0.0 |
| ODS-CL 50 ppm | 8.7 | 15.6 | 40.0 | 89.4 | 0.0 |
| ODS-CL 100 ppm | 5.5 | 11.1 | 27.8 | 71.8 | 12.5 |
| ODS-CL 500 ppm | 0.0 | 0.0 | 0.0 | 0.0 | 100.0 |
| ODS-CL 1000 ppm | 0.0 | 0.0 | 0.0 | 0.0 | 100.0 |
| SYLLIT MAX 1000 ppm | 0.0 | 0.9 | 1.7 | 1.7 | 98.0 |
| Dithan Neotec 1000 ppm | 0.0 | 0.0 | 0.0 | 0.0 | 100.0 |

Results are also shown in Figure 2.

For comparison of the fungicide DSI %, the fungicide efficacy obtained from preventively treated potato leaves inoculated with *P. infestans* 24h after treatment was calculated from DSI values at the final assessment timing (10 dpi).

Results are also shown in Figure 3.

As demonstrated, octadecyl dimethyl sulfonium chloride (ODS-Cl) based fungicide tested straight in this study is efficient to protect potato leaves against late blight at dose starting from 100 ppm. When used at 1000 ppm, ODS-Cl is able to generate a full control of the disease similar to what is obtained from both references Dithan Neotec (Mancozeb) and SYLLIT MAX (Dodine) used at this same dose.

Example 3 - In vitro fungicide relative activity screening

The relative activity of octadecyl dimethyl sulfonium salts against fungal pathogens was tested in an *in vitro* fungicide relative activity screening in microtiter plates. Three fungal pathogens having relevant field impact were selected for this screening: *Zymoseptoria tritici, Phytophthora infestans* and *Venturia inaequalis.*

The octadecyl dimethyl sulfonium salts were tested as such and with the addition of electrolytes. A concentration range of each condition was tested against a calibrated spore suspension of the fungal pathogen of interest.

*A) Zymoseptoria tritici:*

The results for octadecyl dimethyl sulfonium chloride (ODS-Cl) are compiled in the table here below:

| | | Components | | Ratio Components A to B [mol] | | Activity (%) | | | |
|---|---|---|---|---|---|---|---|---|---|
| | | A | B | | | 0.05 ppm | 0.1 ppm | 0.5 ppm | 1 ppm |
| Inventive | 1-1 | ODS-Cl | NaCl | 1 | 1 | 5.2 | 6.2 | 14.9 | 97.8 |
| | 1-2 | | | 1 | 2 | 2.4 | 4.7 | 18.7 | 94.0 |
| | 1-3 | | | 2 | 1 | 0.9 | 0.1 | 10.7 | 96.5 |
| | 1-4 | | | 1 | 4 | -3.5 | -0.4 | 13.3 | 97.4 |
| | 1-5 | | KCl | 1 | 2 | 1.5 | 0.2 | 13.3 | 100.0 |
| | 1-6 | | $MgCl_2$ | 1 | 2 | -1.5 | 4.2 | 7.3 | 94.5 |
| | 1-7 | | $CaCl_2$ | 1 | 2 | 2.7 | 3.3 | 18.9 | 100.3 |
| | 1-8 | | $FeCl_3$ | 1 | 2 | 1.4 | 2.6 | 16.7 | 100.7 |
| | 1-9 | | $CuCl_2$ | 1 | 2 | 11.0 | -2.1 | 13.1 | 96.2 |
| | 1-10 | | $ZnCl_2$ | 1 | 1 | 6.1 | 6.3 | 17.7 | 100.6 |
| | 1-11 | | | 1 | 2 | 7.1 | 7.7 | 27.7 | 98.4 |
| | 1-12 | | | 2 | 1 | 3.0 | 5.3 | 32.1 | 100.7 |
| | 1-13 | | | 1 | 4 | 9.6 | 6.0 | 38.1 | 95.9 |
| comp. | 1-14 | | - | 1 | - | 6.5 | 8.8 | 11.5 | 91.0 |
| comp. | 1-15 | - | Dodine | - | 1 | 5.2 | 21.4 | 100.7 | 98.1 |
| | 1-16 | - | Chlorothalonil | - | 1 | 4.3 | 10.0 | 17.9 | 54.7 |

As demonstrated, the addition of electrolytes improves the relative activity of octadecyl dimethyl sulfonium chloride (ODS-Cl). Further, electrolytes comprising different cations are suitable to improve the relative activity of ODS-Cl.

The results for octadecyl dimethyl sulfonium iodide (ODS-I) are compiled in the table here below:

| | | Components | | Ratio Components A to B [mol] | | Activity (%) | | | |
|---|---|---|---|---|---|---|---|---|---|
| | | A | B | | | 0.05 ppm | 0.1 ppm | 0.5 ppm | 1 ppm |
| Inventive | 2-1 | ODS-I | NaCl | 1 | 1 | 0.1 | 10.9 | 7.8 | 95.7 |
| | 2-2 | | ZnCl2 | 1 | 1 | 7.0 | 4.9 | 22.2 | 96.3 |
| | 2-3 | | | 1 | 2 | 5.3 | 5.4 | 16.4 | 97.8 |
| | 2-4 | | | 2 | 1 | -4.9 | -4.0 | 6.3 | 94.3 |
| comp. | 2-5 | | - | 1 | - | 6.4 | 2.7 | 11.2 | 92.7 |
| comp. | 2-6 | - | Dodine | - | 1 | 5.2 | 21.4 | 100.7 | 98.1 |
| | 2-7 | - | Chlorothalonil | - | 1 | 4.3 | 10.0 | 17.9 | 54.7 |

As demonstrated, the addition of electrolytes also improves the relative activity of octadecyl dimethyl sulfonium iodide (ODS-I). Further, electrolytes comprising different cations are suitable to improve the relative activity of ODS-I.

The results for octadecyl dimethyl sulfonium hydroxide (ODS-OH) are compiled in the table here below:

| | | Components | | Ratio Components A to B [mol] | | Activity (%) | | | |
|---|---|---|---|---|---|---|---|---|---|
| | | A | B | | | 0.05 ppm | 0.1 ppm | 0.5 ppm | 1 ppm |
| Inven-tive | 3-1 | ODS-Cl | $OH^-$ | 2 | 1 | 6.3 | 11.0 | 93.6 | 100.2 |
| | 3-2 | ODS-OH | $Cl^-$ | 1 | 1 | 16.6 | 23.3 | 98.8 | 101.2 |
| | 3-3 | | $SO_4^{2-}$ | 2 | 1 | 17.3 | 24.1 | 97.1 | 99.3 |

| | | | | | | | | | |
|---|---|---|---|---|---|---|---|---|---|
| | 3-4 | | $F^-$ | 1 | 1 | 15.2 | 26.1 | 99.3 | 103.3 |
| | 3-5 | | $Br^-$ | 1 | 1 | 5.8 | 14.5 | 97.4 | 98.6 |
| | 3-6 | | [1]$C_{17}H_{33}COO^-$ | 1 | 1 | 13.2 | 21.8 | 99.0 | 99.3 |
| | 3-7 | | Alanine-L | 1 | 1 | 15.3 | 20.1 | 99.9 | 99.2 |
| | 3-8 | | Alanine-D | 1 | 1 | 12.0 | 19.5 | 99.2 | 103.6 |
| | 3-9 | | [2]Tosylate | 1 | 1 | 9.3 | 20.1 | 98.9 | 98.7 |
| co mp | 3-10 | - | Dodine | - | 1 | 5.2 | 21.4 | 100.7 | 98.1 |
| | 3-11 | - | Chlorothalonil | - | 1 | 4.3 | 10.0 | 17.9 | 54.7 |

[1]oleate; [2]imployed as $C_{12}H_{13}NO_3S$

As demonstrated, the addition of electrolytes comprising different anions is suitable to improve the relative activity of octadecyl dimethyl sulfonium hydroxide (ODS-OH). An relative activity over 93% is reached for all anions at only 0.5 ppm.

*B) Phytophthora infestans:*

| | | Inventive | | | | | | | | comparative | |
|---|---|---|---|---|---|---|---|---|---|---|---|
| | | 4-1 | 4-3 | 4-4 | 4-5 | 4-6 | 4-7 | 4-8 | 4-9 | 4-10 | 4-11 |
| | Component A | ODS-Cl | ODS-OH | | | | | | | - | - |
| | Component B | - | $SO4^{2-}$ | $F^-$ | $Br^-$ | [1]$C_{17}H_{33}COO^-$ | Alanine-L | Alanine-D | [2]Tosylate | Dodine | Chlorothalonil |
| | Ratio Comp A | 1 | 2 | 1 | 1 | 1 | 1 | 1 | 1 | - | - |
| | Ratio Comp B | - | 1 | 1 | 1 | 1 | 1 | 1 | 1 | 1 | 1 |
| Activity (%) | 0.05 ppm | 6.2 | 5.8 | 6.2 | 5.9 | 8.6 | 7.4 | 10.3 | 10.1 | 12.5 | -11.8 |
| | 0.1 ppm | 12.6 | 8.9 | 7.0 | 4.1 | 4.1 | 18.7 | 13.6 | 6.5 | 12.0 | -5.8 |
| | 0.5 ppm | 12.5 | 11.7 | 8.3 | 7.3 | 10.2 | 7.5 | 9.2 | -8.0 | 59.4 | -2.0 |
| | 1 ppm | 12.3 | 17.1 | 17.9 | 5.1 | 10.6 | 4.7 | 6.9 | 4.8 | 81.9 | 15.3 |
| | 5 ppm | 14.1 | 12.7 | 14.4 | 5.6 | 3.1 | 18.5 | -0.1 | -4.1 | 93.8 | 99.2 |
| | 10 ppm | 29.3 | 41.6 | 86.6 | 44.1 | 43.6 | 75.4 | 96.6 | 44.1 | 95.5 | 98.5 |
| | 50 ppm | 98.4 | 97.4 | 103.0 | 100.1 | 98.5 | 99.2 | 99.9 | 99.9 | 98.9 | 100.3 |

[1]oleate; [2]imployed as $C_{12}H_{13}NO_3S$

*C) Venturia inaequalis:*

| | | Inventive | | | | | | | | | | comparative | |
|---|---|---|---|---|---|---|---|---|---|---|---|---|---|
| | | 5-1 | 5-2 | 5-3 | 5-4 | 5-5 | 5-6 | 5-7 | 5-8 | 5-9 | 5-10 | 5-11 | 5-12 |
| | Component A | ODS-Cl | | ODS-OH | | | | | | | | - | - |
| | Component B | - | $OH^-$ | $Cl^-$ | $SO4^{2-}$ | $F^-$ | $Br^-$ | [1]$C_{17}H_{33}COO^-$ | Alanine-L | Alanine-D | [2]Tosylate | Dodine | Chlorothalonil |
| | Ratio Comp A | 1 | 2 | 1 | 2 | 1 | 1 | 1 | 1 | 1 | 1 | - | - |
| | Ratio Comp B | - | 1 | 1 | 1 | 1 | 1 | 1 | 1 | 1 | 1 | 1 | 1 |
| Activity (%) | 0.05 ppm | -8.5 | 3.0 | 2.9 | 29.2 | 16.9 | 22.7 | 9.4 | 25.1 | 24.3 | 15.0 | 41.8 | 3.4 |
| | 0.1 ppm | 14.3 | 48.0 | 12.3 | 17.5 | 3.2 | 10.2 | 19.2 | 38.1 | 26.6 | 22.5 | 83.2 | 34.3 |
| | 0.5 ppm | 97.4 | 98.8 | 100.1 | 101.2 | 99.5 | 99.1 | 98.3 | 99.7 | 99.0 | 98.7 | 98.2 | 88.8 |
| | 1 ppm | 97.2 | 100.2 | 99.6 | 99.9 | 99.9 | 99.3 | 97.0 | 99.3 | 102.2 | 99.8 | 97.3 | 97.4 |

[1]oleate; [2]imployed as $C_{12}H_{13}NO_3S$

As demonstrated, the addition of electrolytes improves the relative activity of octadecyl dimethyl sulfonium hydroxide (ODS-OH) against different fungal pathogens. Further, the addition of electrolytes comprising different anions is suitable to improve the relative activity of octadecyl dimethyl sulfonium hydroxide (ODS-OH).

## Claims

**1.** A composition comprising

- a trialkyl sulfonium salt of formula (A)

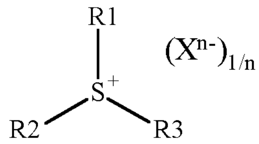

wherein

R1 represents $-CH_3$, $-CH_2CH_3$, $-CH_2CH_2CH_3$, or $-CH(CH_3)_2$; preferably $-CH_3$;
R2 represents $-CH_3$, $-CH_2CH_3$, $-CH_2CH_2CH_3$, or $-CH(CH_3)_2$; preferably $-CH_3$;
R3 represents $-C_{17-32}$-alkyl, straight or branched, saturated or unsaturated; preferably - $C_{18}$-alkyl, straight, saturated;
$X^{n-}$ is a monovalent or multivalent anion; and
n is an integer 1, 2 or 3;
or a solvate thereof;
wherein the content of the trialkyl sulfonium salt is more than 0.1 wt.-%, relative to the total weight of the composition; and

- an electrolyte,
wherein the content of the electrolyte is at least 0.5 wt.-%, relative to the total weight of the composition.

**2.** The composition according to claim 1, wherein the content of the trialkyl sulfonium salt is at least 0.5 wt.-%, preferably at least 1.0 wt.-%, preferably at least 2.5 wt.-%, preferably at least 5 wt.-%, preferably at least 7.5 wt.-%, preferably at least 10 wt.-%, preferably at least 12.5 wt.-%, preferably at least 15 wt.-%, preferably at least 17.5 wt.-%, preferably at least 20 wt.-%, in each case relative to the total weight of the composition.

**3.** The composition according to any of the preceding claims, wherein R1 and R2 both represent $-CH_3$.

**4.** The composition according to any of the preceding claims, wherein the trialkyl sulfonium salt is a n-octadecyl dimethyl sulfonium salt

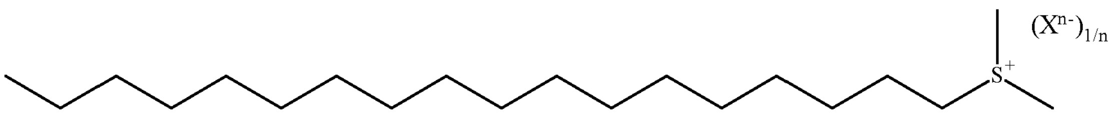

.

**5.** The composition according to any of the preceding claims, wherein $X^{n-}$ is

- a monovalent anion (n = 1);
- a divalent anion (n = 2); or
- a trivalent anion (n = 3).

**6.** The composition according to any of the preceding claims, wherein $X^{n-}$ is $Cl^-$.

**7.** The composition according to any of the preceding claims, wherein the electrolyte comprises or consists of a salt of a cation selected from the group consisting of $NH_4^+$, $Li^+$, $Na^+$, $K^+$, $Ca^{2+}$, $Mg^{2+}$, $Mn^{2+}$, $Fe^{2+}$, $Fe^{3+}$, $Cu^{2+}$, and $Zn^{2+}$ with an anion.

**8.** The composition according to any of the preceding claims, wherein the trialkyl sulfonium salt is n-octadecyl dimethyl sulfonium chloride and the electrolyte is NaCl.

9. The composition according to any of the preceding claims, wherein the molar ratio of the electrolyte in the composition to the trialkyl sulfonium salt of formula (A) is within the range of from 6.0:1.0 to 1.0:4.0, preferably 5.0:1.0 to 1.0:3.0, more preferably 4.0:1.0 to 1.0:2.0, still more preferably 2.0:1.0 to 1.0:1.0.

10. The composition according to any of the preceding claims, wherein the content of the electrolyte is at least 1.0 wt.-%, preferably at least 2.5 wt.-%, preferably at least 5 wt.-%, preferably at least 7.5 wt.-%, preferably at least 10 wt.-%, preferably at least 12.5 wt.-%, preferably at least 15 wt.-%, preferably at least 17.5 wt.-%, preferably at least 20 wt.-%, in each case relative to the total weight of the composition.

11. The composition according to any of the preceding claims, which further comprises one or more further antifungal agents.

12. The composition according to any of the preceding claims, which is a pre-mix concentrate, more preferably a pre-mix suspension concentrate, still more preferably an aqueous pre-mix suspension concentrate.

13. Non-therapeutic use of a composition according to any of claims 1 to 12 as a pesticide.

14. A non-therapeutic method for controlling or combating pests and/or improving plant health comprising contacting the pests, their habitat, materials or plants to be protected against attack by the pests, the soil, the locus where the plant is growing, the locus where the plant is to grow or propagation material with a pesticidally effective amount of a composition according to any of claims 1 to 12.

**Patentansprüche**

1. Eine Zusammensetzung, umfassend

- ein Trialkylsulfoniumsalz der Formel (A)

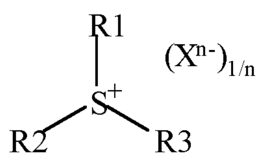

wobei

R1 bedeutet $-CH_3$, $-CH_2CH_3$, $-CH_2CH_2CH_3$oder $-CH(CH_{3)2}$; vorzugsweise $-CH_3$
R2 bedeutet $-CH_3$, $-CH_2CH_3$, $-CH_2CH_2CH_3$oder $-CH(CH_{3)2}$; vorzugsweise $-CH_3$;
R3 bedeutet $-C_{17-32}$-Alkyl, geradkettig oder verzweigt, gesättigt oder ungesättigt; vorzugsweise $-C_{18}$-Alkyl, geradkettig, gesättigt;
$X^{(n-)}$ ist ein einwertiges oder mehrwertiges Anion; und
n ist eine ganze Zahl 1, 2 oder 3;
oder ein Solvat davon;
wobei der Gehalt des Trialkylsulfoniumsalzes mehr als 0,1 Gew.-% beträgt, bezogen auf das Gesamtgewicht der Zusammensetzung; und

- ein Elektrolyt,
wobei der Gehalt des Elektrolyten mindestens 0,5 Gew.-% beträgt bezogen auf das Gesamtgewicht der Zusammensetzung.

2. Zusammensetzung nach Anspruch 1, wobei der Gehalt des Trialkylsulfoniumsalzes mindestens 0,5 Gew.-% beträgt, vorzugsweise mindestens 1,0 Gew.-%, vorzugsweise mindestens 2,5 Gew.-%, vorzugsweise mindestens 5 Gew.-%, vorzugsweise mindestens 7,5 Gew.-%, vorzugsweise mindestens 10 Gew.-%, vorzugsweise mindestens 12,5 Gew.-%, vorzugsweise mindestens 15 Gew.-%, vorzugsweise mindestens 17,5 Gew.-%, vorzugsweise mindestens 20 Gew.-%, jeweils bezogen auf das Gesamtgewicht der Zusammensetzung.

3. Zusammensetzung nach einem der vorhergehenden Ansprüche, wobei R1 und R2 beide $-CH_3$ bedeuten.

**4.** Zusammensetzung nach einem der vorhergehenden Ansprüche, wobei das Trialkylsulfoniumsalz ein n-Octadecyl-Dimethylsulfoniumsalz ist

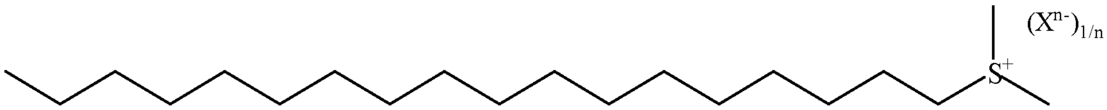

.

**5.** Zusammensetzung nach einem der vorhergehenden Ansprüche, wobei $X^{(n-)}$

- ein monovalentes Anion (n = 1);
- ein zweiwertiges Anion (n = 2); oder
- ein dreiwertiges Anion (n = 3)

ist.

**6.** Zusammensetzung nach einem der vorhergehenden Ansprüche, wobei $X^{(n-)}$ $Cl^-$ ist.

**7.** Zusammensetzung nach einem der vorhergehenden Ansprüche, wobei der Elektrolyt ein Salz eines Kations, ausgewählt aus der Gruppe bestehend aus $NH_4^+$, $Li^+$, $Na^+$, $K^+$, $Ca^{2+}$, $Mg^{2+}$, $Mn^{2+}$, $Fe^{2+}$, $Fe^{3+}$, $Cu^{2+}$ und $Zn^{2+}$, mit einem Anion umfasst oder daraus besteht.

**8.** Zusammensetzung nach einem der vorhergehenden Ansprüche, wobei das Trialkylsulfoniumsalz n-Octadecyldimethylsulfoniumchlorid ist und der Elektrolyt NaCl ist.

**9.** Zusammensetzung nach einem der vorhergehenden Ansprüche, wobei das molare Verhältnis des Elektrolyten in der Zusammensetzung zu dem Trialkylsulfoniumsalz der Formel (A) im Bereich von 6,0:1,0 bis 1,0:4,0 liegt, vorzugsweise 5,0:1,0 bis 1,0:3,0, noch bevorzugter 4,0:1,0 bis 1,0:2,0, noch bevorzugter 2,0:1,0 bis 1,0:1,0.

**10.** Zusammensetzung nach einem der vorhergehenden Ansprüche, wobei der Gehalt an Elektrolyt mindestens 1,0 Gew.-% beträgt, vorzugsweise mindestens 2,5 Gew.-%, vorzugsweise mindestens 5 Gew.-%, vorzugsweise mindestens 7,5 Gew.-%, vorzugsweise mindestens 10 Gew.-%, vorzugsweise mindestens 12,5 Gew.-%, vorzugsweise mindestens 15 Gew.-%, vorzugsweise mindestens 17,5 Gew.-%, vorzugsweise mindestens 20 Gew.-%, jeweils bezogen auf das Gesamtgewicht der Zusammensetzung.

**11.** Zusammensetzung nach einem der vorhergehenden Ansprüche, die außerdem ein oder mehrere weitere Antimykotika enthält.

**12.** Zusammensetzung nach einem der vorhergehenden Ansprüche, bei der es sich um ein Vormischkonzentrat handelt, vorzugsweise um ein Vormischsuspensionskonzentrat, noch bevorzugter um ein wässriges Vormischsuspensionskonzentrat.

**13.** Nicht-therapeutische Verwendung einer Zusammensetzung nach einem der Ansprüche 1 bis 12 als Pestizid.

**14.** Nicht-therapeutisches Verfahren zur Kontrolle oder Bekämpfung von Schädlingen und/oder zur Verbesserung der Pflanzengesundheit, umfassend das Inkontaktbringen der Schädlinge, ihres Lebensraums, von Materialien oder Pflanzen, die gegen den Befall durch die Schädlinge geschützt werden sollen, des Bodens, des Ortes, an dem die Pflanze wächst, des Ortes, an dem die Pflanze wachsen soll, oder von Vermehrungsmaterial mit einer pestizid wirksamen Menge einer Zusammensetzung nach einem der Ansprüche 1 bis 12.

**Revendications**

**1.** Composition comprenant

- un sel de trialkylsulfonium de formule (A)

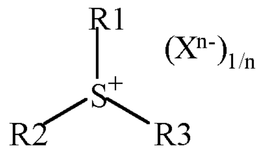

dans laquelle

R1 représente $-CH_3$, $-CH_2CH_3$, $-CH_2CH_2CH_3$ ou $-CH(CH_3)_2$ ; de préférence $-CH_3$ ;
R2 représente $-CH_3$, $-CH_2CH_3$, $-CH_2CH_2CH_3$ ou $-CH(CH_3)_2$ ; de préférence $-CH_3$ ;
R3 représente un groupe alkyle en $-C_{17-32}$, linéaire ou ramifié, saturé ou insaturé ; de préférence un groupe alkyle en $-C_{18}$, linéaire, saturé ;
$X^{n-}$ est un anion monovalent ou multivalent ; et
n est un entier 1, 2 ou 3 ;
ou un solvate de celui-ci ;
dans laquelle la teneur en sel de trialkylsulfonium est supérieure à 0,1 % en poids, par rapport au poids total de la composition ; et

- un électrolyte,

dans laquelle la teneur en électrolyte est d'au moins 0,5 % en poids, par rapport au poids total de la composition.

**2.** Composition selon la revendication 1, dans laquelle la teneur en sel de trialkylsulfonium est d'au moins 0,5 % en poids, de préférence d'au moins 1,0 % en poids, de préférence d'au moins 2,5 % en poids, de préférence d'au moins 5 % en poids, de préférence d'au moins 7,5 % en poids, de préférence d'au moins 10 % en poids, de préférence d'au moins 12,5 % en poids, de préférence d'au moins 15 % en poids, de préférence d'au moins 17,5 % en poids, de préférence d'au moins 20 % en poids, dans chaque cas par rapport au poids total de la composition.

**3.** Composition selon l'une quelconque des revendications précédentes, dans laquelle R1 et R2 représentent tous deux $-CH_3$.

**4.** Composition selon l'une quelconque des revendications précédentes, dans laquelle le sel de trialkylsulfonium est un sel de n-octadécyldiméthylsulfonium

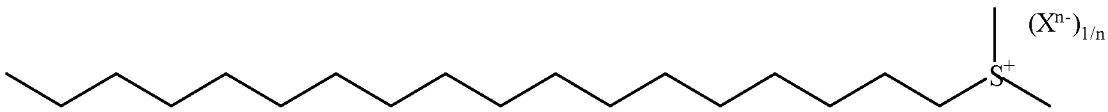

.

**5.** Composition selon l'une quelconque des revendications précédentes, dans laquelle $X^{n-}$ est

- un anion monovalent (n = 1) ;
- un anion divalent (n = 2) ; ou
- un anion trivalent (n = 3).

**6.** Composition selon l'une quelconque des revendications précédentes, dans laquelle $X^{n-}$ est $Cl^-$.

**7.** Composition selon l'une quelconque des revendications précédentes, dans laquelle l'électrolyte comprend ou est constitué d'un sel d'un cation choisi dans le groupe constitué de $NH_4^+$, $Li^+$, $Na^+$, $K^+$, $Ca^{2+}$, $Mg^{2+}$, $Mn^{2+}$, $Fe^{2+}$, $Fe^{3+}$, $Cu^{2+}$ et $Zn^{2+}$ avec un anion.

**8.** Composition selon l'une quelconque des revendications précédentes, dans laquelle le sel de trialkylsulfonium est le chlorure de n-octadécyldiméthylsulfonium et l'électrolyte est NaCl.

**9.** Composition selon l'une quelconque des revendications précédentes, dans laquelle le rapport molaire de l'électrolyte dans la composition au sel de trialkylsulfonium de formule (A) se situe dans la plage de 6,0:1,0 à 1,0:4,0, de préférence de 5,0:1,0 à 1,0:3,0, de manière davantage préférée de 4,0:1,0 à 1,0:2,0, de manière encore davantage préférée de

2,0:1,0 à 1,0:1,0.

**10.** Composition selon l'une quelconque des revendications précédentes, dans laquelle la teneur en électrolyte est d'au moins 1,0 % en poids, de préférence d'au moins 2,5 % en poids, de préférence d'au moins 5 % en poids, de préférence d'au moins 7,5 % en poids, de préférence d'au moins 10 % en poids, de préférence d'au moins 12,5 % en poids, de préférence d'au moins 15 % en poids, de préférence d'au moins 17,5 % en poids, de préférence d'au moins 20 % en poids, dans chaque cas par rapport au poids total de la composition.

**11.** Composition selon l'une quelconque des revendications précédentes, qui comprend également un ou plusieurs autres agents antifongiques.

**12.** Composition selon l'une quelconque des revendications précédentes, qui est un concentré de prémélange, de manière davantage préférée un concentré de suspension de prémélange, de manière encore davantage préférée un concentré de suspension de prémélange aqueux.

**13.** Utilisation non thérapeutique d'une composition selon l'une quelconque des revendications 1 à 12 comme pesticide.

**14.** Procédé non thérapeutique de contrôle ou de lutte contre les parasites et/ou d'amélioration de la santé des plantes, comprenant la mise en contact des parasites, de leur habitat, des matériaux ou des plantes à protéger contre les attaques des parasites, du sol, du lieu où la plante pousse, du lieu où la plante doit pousser ou du matériel de propagation avec une quantité efficace d'un point de vue pesticide d'une composition selon l'une quelconque des revendications 1 à 12.

Figure 1

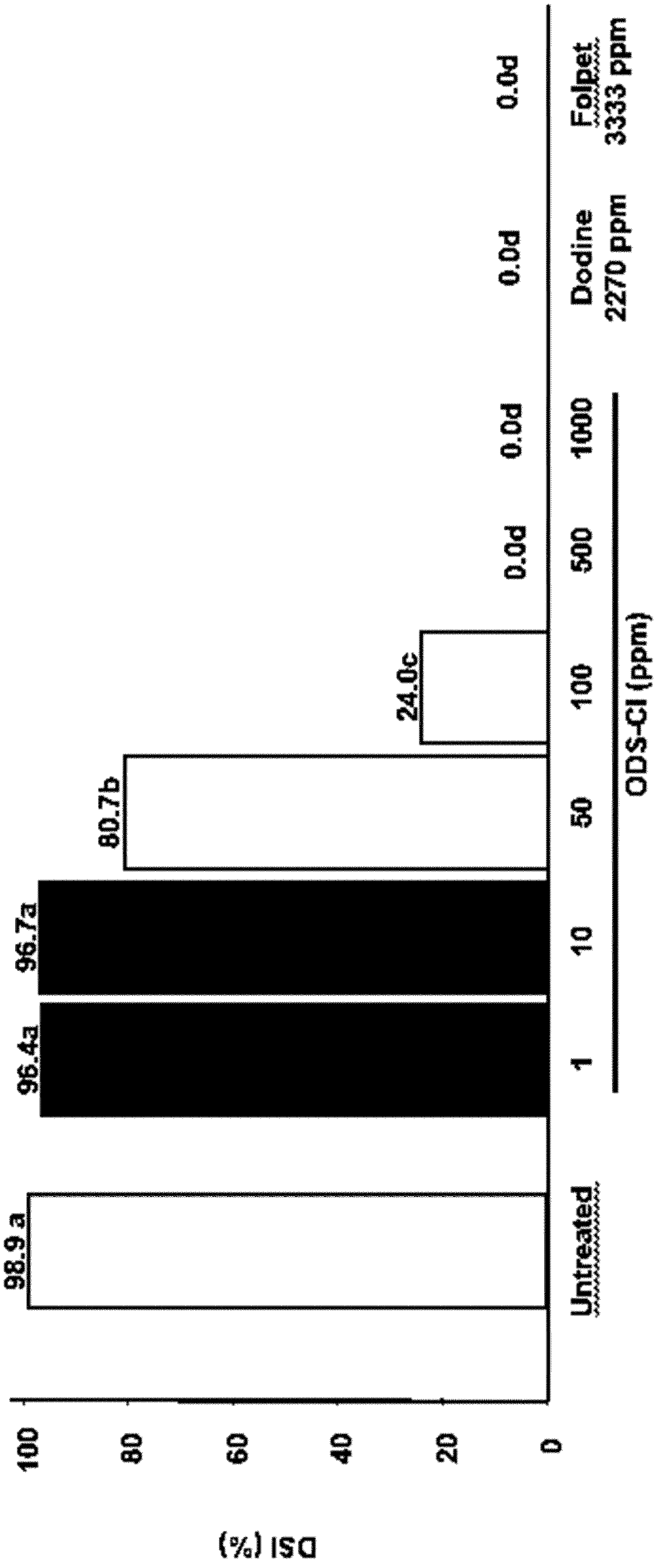
DSI (%)
100
80
60
40
20
0
98.9 a
96.4a
96.7a
80.7b
24.0c
0.0d
0.0d
0.0d
0.0d
Untreated
1
10
50
100
500
1000
ODS-Cl (ppm)
Dodine
2270 ppm
Folpet
3333 ppm

Figure 2

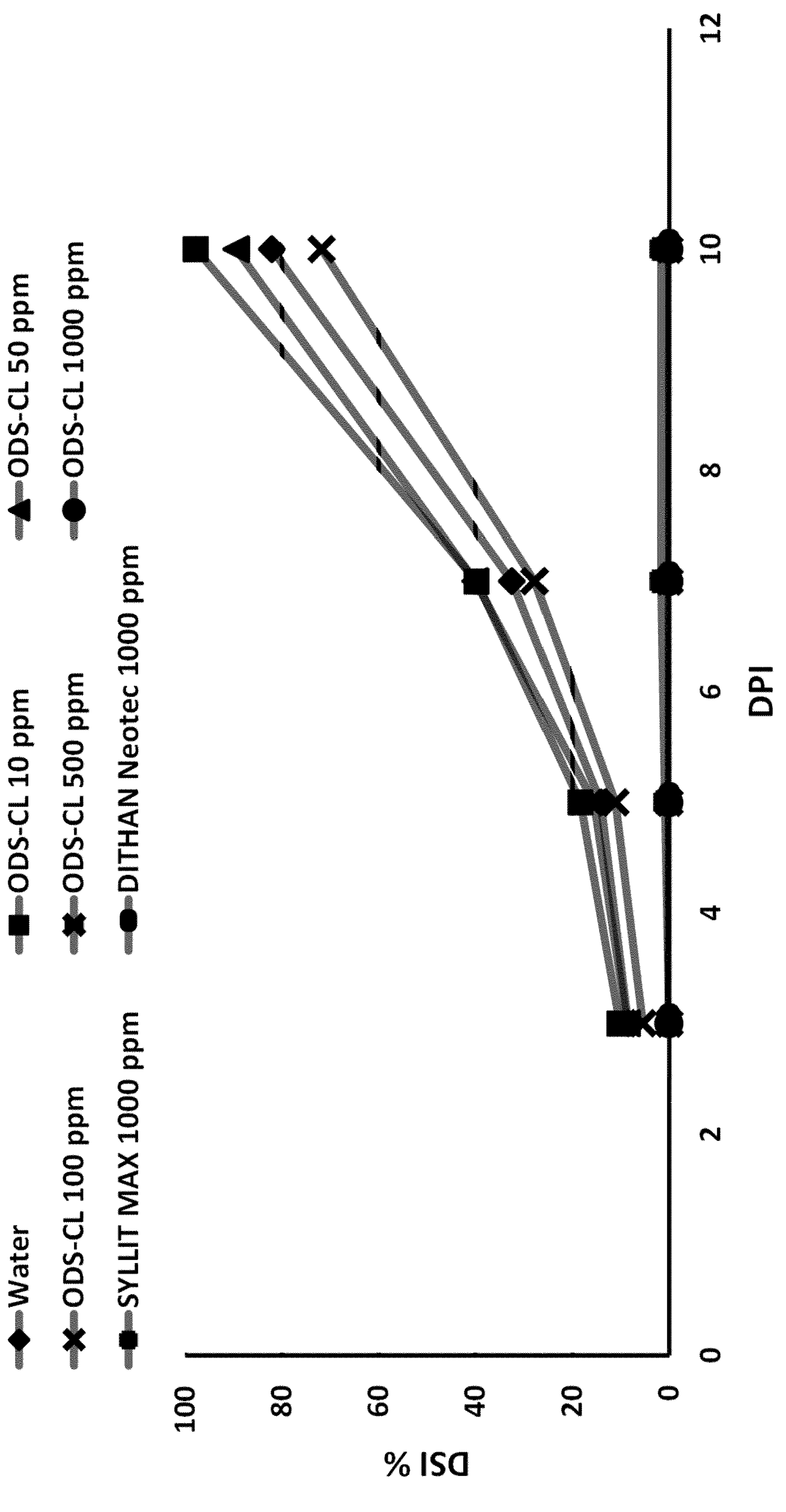
Water
ODS-CL 10 ppm
ODS-CL 50 ppm
ODS-CL 100 ppm
ODS-CL 500 ppm
ODS-CL 1000 ppm
SYLLIT MAX 1000 ppm
DITHAN Neotec 1000 ppm
DSI %
0
20
40
60
80
100
0
2
4
6
8
10
12
DPI

Figure 3

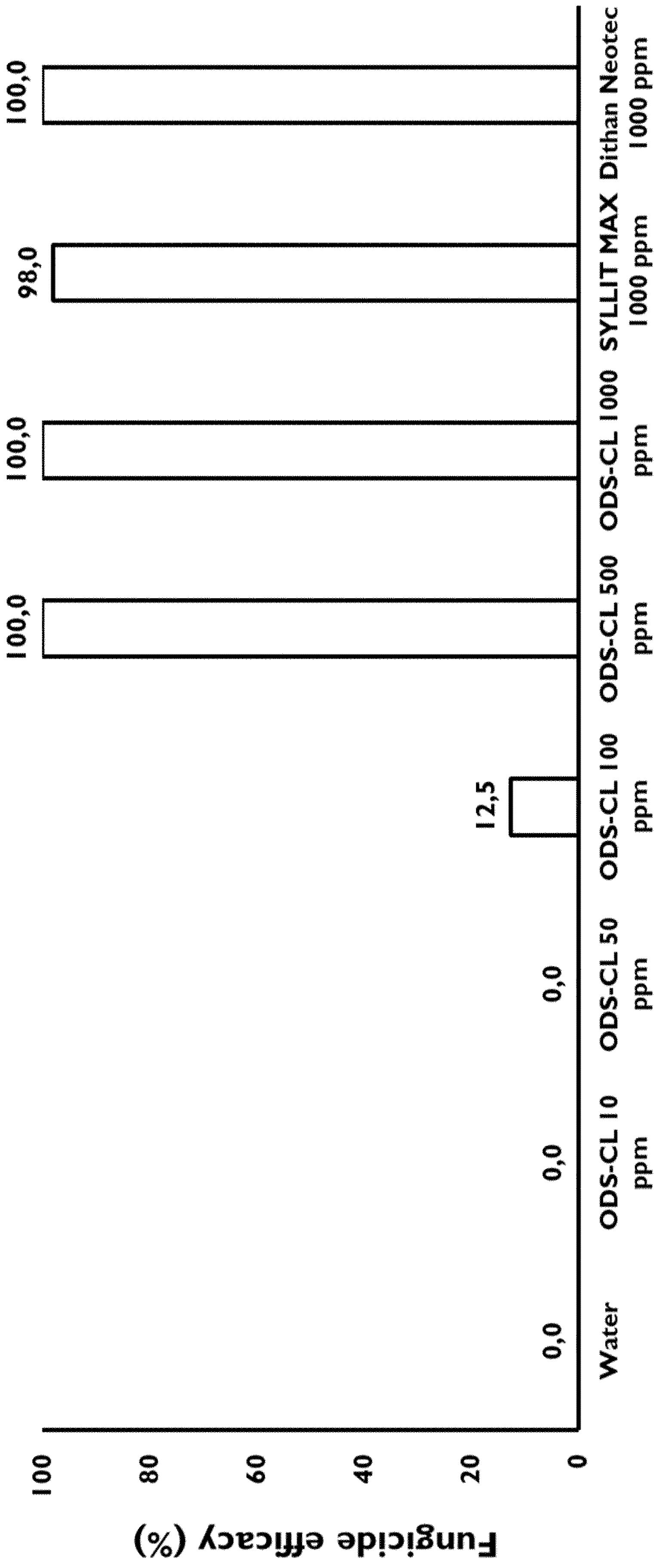
Fungicide efficacy (%)
0
20
40
60
80
100
0,0
Water
0,0
ODS-CL 10 ppm
0,0
ODS-CL 50 ppm
12,5
ODS-CL 100 ppm
100,0
ODS-CL 500 ppm
100,0
ODS-CL 1000 ppm
98,0
SYLLIT MAX 1000 ppm
100,0
Dithan Neotec 1000 ppm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 20199747 A
- EP 20199746 A
- FR 1182709 A
- US 2867562 A
- US 3143459 A
- US 3157695 A
- FR 2256278 A1
- US 3666403 A
- US 3826609 A
- US 3235356 A
- US 4475941 A
- US 4753961 A
- FR 2467547 A1
- US 4088781 A
- US 4542023 A
- US 4464194 A
- JP S4536830 B
- FR 810437
- WO 9317723 A


### Non-patent literature cited in the description


- **NINA ANTOS-KRZEMINSKA et al.** *Protist*, February 2019, vol. 170, 21-37
- **MURPHY, M.P.** How mitochondria produce reactive oxygen species. *Biochem. J.*, 2009, vol. 417, 1-13
- **LI, D. et al.** Enzymatic dysfunction of mitochondrial complex I of the Candida albicans goal mutant is associated with increased reactive oxidants and cell death. *Eukaryot. Cell*, 2011, vol. 10, 672-682
- **G. STEINBERG et al.** A lipohilic cation protects crops against fungal pathogens by multiple modes of action. *Nature Communications*, 2020, vol. 11, 1608
- **S. MITCHELL**. Biological Interactions of Sulfur Compounds. Taylor & Francis, 1996, 208-210
- **P.R. YOUNG et al.** *Lipids*, 1991, vol. 26 (11), 957-959
- **P.R. YOUNG et al.** Lipids. Springer, 1991, vol. 26, 957-959
- **J. FEIHUA et al.** *synthesis of new cationic surfactant containing sulfur and study on their physico-chemical properties*, 1994, vol. 194520, 1-2
- **K. NEGORO et al.** *journal of the Japan oil chemists' society*, 1978, vol. 27 (1), 47-51
- **K. YAMANAUCHI et al.** *J. Am. Chem. Soc.*, 1983, vol. 105, 538-545